(19) Europäisches Patentamt
European Patent Office
Office européen des brevets

(11) **EP 3 616 068 B1**

(12) **EUROPEAN PATENT SPECIFICATION**

(45) Date of publication and mention of the grant of the patent:
**20.04.2022 Bulletin 2022/16**

(21) Application number: **18702002.9**

(22) Date of filing: **10.01.2018**

(51) International Patent Classification (IPC):
*G06F 12/0868* (2016.01)    *G06F 12/0873* (2016.01)
*G06F 21/62* (2013.01)    *G06F 21/78* (2013.01)
*G06F 12/0804* (2016.01)    *G06F 12/126* (2016.01)

(52) Cooperative Patent Classification (CPC):
**G06F 12/0868; G06F 12/0873;** G06F 12/0804;
G06F 12/126; G06F 21/6227; G06F 21/6245;
G06F 21/78; G06F 2212/1052; G06F 2212/154;
G06F 2212/261; G06F 2212/263; G06F 2212/465

(86) International application number:
**PCT/US2018/013136**

(87) International publication number:
**WO 2018/200046 (01.11.2018 Gazette 2018/44)**

(54) **EFFICIENT OBLIVIOUS PERMUTATION**

EFFIZIENTE UNBEWUSSTE PERMUTATION

PERMUTATION INCONSCIENTE EFFICACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2017 US 201762490804 P**

(43) Date of publication of application:
**04.03.2020 Bulletin 2020/10**

(73) Proprietor: **Google LLC**
**Mountain View, CA 94043 (US)**

(72) Inventors:
• **YEO, Kevin**
**Mountain View**
**CA 94043 (US)**
• **PATEL, Sarvar**
**Mountain View**
**CA 94043 (US)**
• **PERSIANO, Giuseppe**
**Mountain View**
**CA 94043 (US)**

(74) Representative: **Korenberg, Alexander Tal et al**
**Kilburn & Strode LLP**
**Lacon London**
**84 Theobalds Road**
**London WC1X 8NL (GB)**

(56) References cited:
**WO-A2-2014/151157    US-A- 5 123 045**
**US-A1- 2014 007 250**

• **Dan Boneh ET AL: "Remote Oblivious Storage: Making Oblivious RAM Practical", , 30 March 2011 (2011-03-30), XP055461454, Retrieved from the Internet: URL:https://dspace.mit.edu/bitstream/handl e/1721.1/62006/MIT-CSAIL-TR-2011-018.pdf [retrieved on 2018-03-21]**

## Description

TECHNICAL FIELD

This disclosure relates to obliviously moving data blocks stored on memory.

BACKGROUND

Enterprises and individuals are using distributed storage systems (i.e., cloud storage services) to store data on memory overlying multiple memory locations. Many of these enterprises and individuals encrypt their data before uploading onto distributed storage system. In order to use essential functionalities offered by the cloud storage services, such as performing search queries on stored data, enterprises are required to provide plaintext access to the cloud storage services. As a result, many government and sensitive private sectors, such as health, finance, and legal, or reluctant to use cloud storage services, despite their increased convenience and cost advantages. Additionally, encryption alone may not suffice for ensuring data privacy, as the mere knowledge of data access patterns can provide a significant amount of information about the data without ever needing to decrypt the data.

US2014/007250A1 disclose methods and systems of concealing access patterns to data storage, such as within servers of a cloud computing environment, in which server data storage is securely partitioned into smaller electronic data storage partitions of predetermined size.

SUMMARY

The invention is defined in the appended claims. The dependent claims set out particular embodiments.

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of an example system for obliviously moving data blocks stored on non-transitory data storage of a distributed system.
FIG. 2 is a schematic view of an example system for allowing one or more clients to obliviously move data blocks stored on non-transitory data storage of a distributed storage system.
FIGS. 3A-3J are schematic views of an example oblivious permutation routine for obviously moving data blocks stored on memory hardware.
FIGS. 4A and 4B are schematic views of an example recalibration process for recalibrating buffer buckets stored on memory hardware.
FIG. 5 is an example algorithm for applying obliviously shuffling at a client device.
FIG. 6 is an example algorithm for applying obliviously shuffling at a client device.
FIG. 7 is a schematic view of an example arrangement of operations for a method of obliviously moving data blocks stored on memory hardware.
FIG. 8 is a schematic view of an example computing device executing an oblivious permutation routine.

Like reference symbols and the various drawings indicate like elements.

DETAILED DESCRIPTION

Implementations herein are directed toward using oblivious random access memory (O-RAM) to conceal client access patterns to client-owned and client-encrypted data stored on untrusted memory. The untrusted memory may include a storage abstraction overlaid across multiple memory locations of a distributed system. The untrusted memory may be divided into multiple buckets each containing an equal number of data blocks and the client may iteratively download one bucket at a time from the untrusted memory and apply a random permutation on the data blocks residing in the downloaded bucket. The random permutation may assign each of the data blocks from the downloaded bucket a new memory location on the untrusted memory that is oblivious to a service provider of the untrusted memory (e.g., a cloud service provider). Moreover, the client may further decrypt and encrypt the data blocks locally using client-side keys without giving the service provider plain text access to the data. Implementations further include initializing cache slots in local memory at the client for storing the permutated data blocks before uploading the data blocks to their new memory locations. Each cache slot may serve as an extension to the new memory locations of the untrusted memory, and therefore reduce a level of overhead and bandwidth required for uploading permutated data blocks from the client to the untrusted memory.

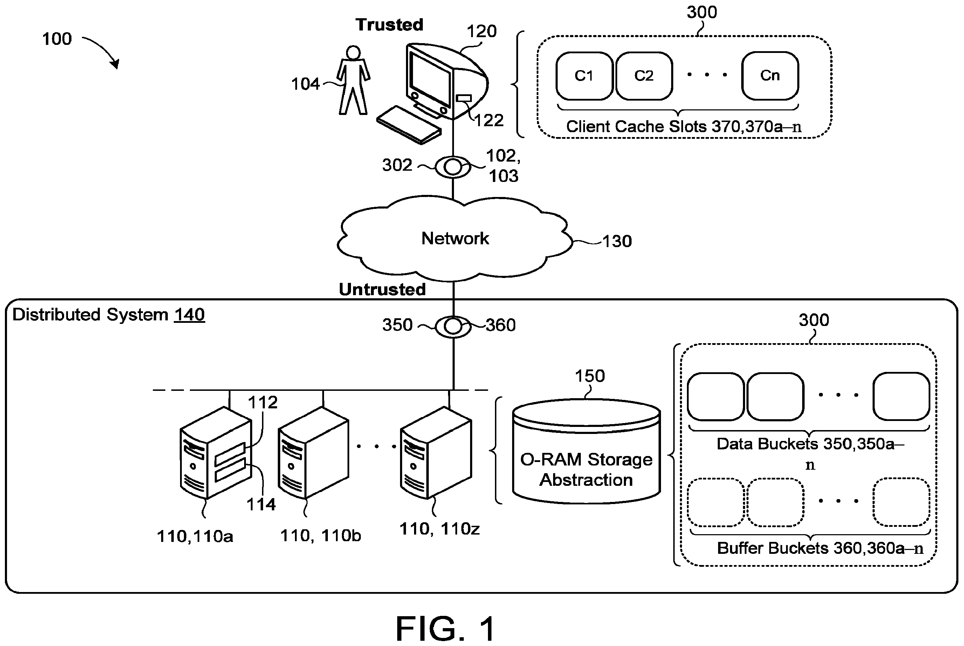

FIG. 1 depicts an example system 100 for storing data blocks 102 owned by a client 104 on a distributed system 140 and obliviously moving the data blocks 102 around the distributed system 140 to conceal access patterns while preserving search functionalities on the data blocks 102 by the client 104. A client device 120 (e.g., a computer) associated with the client 104 communicates, via a network 130, with the distributed system 140 having a scalable/elastic non-transitory storage abstraction 150. The client device 120 may include associated memory hardware 122. The storage abstraction 150 (e.g., key/value store, file system, data store, etc.) is overlain on the storage resources 114 to allow scalable use of the storage resources 114 by one or more client devices 120.

In some implementations, the distributed system 140 executes a computing device 112 that manages access to the storage abstraction 150. For instance, the client device 120 may encrypt and store the data blocks 102 on the storage abstraction 150, as well as retrieve and decrypt the data blocks 102 from the storage abstraction 150. While the example shown depicts the system 100 having a trusted side associated with the client device 120 in communication, via the network 130, with an untrusted side associated with the distributed system 140, the system 100 may be alternatively implemented on a large intranet having a trusted computing device(s) (CPU) and untrusted data storage.

In some implementations, the distributed system 100 includes resources 110, 110a-z. The resources 110 may include hardware resources 110 and software resources 110. The hardware resources 110 may include computing devices 112 (also referred to as data processing devices and data processing hardware) or non-transitory memory 114 (also referred to as memory hardware). The software resources 110 may include software applications, software services, application programming interfaces (APIs) or the like. The software resources 110 may reside in the hardware resources 110. For example, the software resources 110 may be stored in the memory hardware 114 or the hardware resources 110 (e.g., the computing devices 112) may be executing the software resources 110.

A software application (i.e., a software resource 110) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

The memory hardware 114, 122 may be physical devices used to store programs (e.g., sequences of instructions) or data (e.g., program state information) on a temporary or permanent basis for use by a computing device 112 and/or a client device 120. The memory hardware 114, 122 may be volatile and/or non-volatile addressable semiconductor memory. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), oblivious random access memory (ORAM), dynamic random access memory (DRAM), static random access memory (SRAM), phase change memory (PCM) as well as disks or tapes.

The network 130 may include various types of networks, such as local area network (LAN), wide area network (WAN), and/or the Internet. Although the network 130 may represent a long range network (e.g., Internet or WAN), in some implementations, the network 130 includes a shorter range network, such as a local area network (LAN). In some implementations, the network 130 uses standard communications technologies and/or protocols. Thus, the network 130 can include links using technologies, such as Ethernet, Wireless Fidelity (WiFi) (e.g., 802.11), worldwide interoperability for microwave access (WiMAX), 3G, Long Term Evolution (LTE), digital subscriber line (DSL), asynchronous transfer mode (ATM), InfiniBand, PCI Express Advanced Switching, Bluetooth, Bluetooth Low Energy (BLE), etc. Similarly, the networking protocols used on the network 132 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 130 can be represented using technologies and/or formats including the hypertext markup language (HTML), the extensible markup language (XML), etc. In addition, all or some of the links can be encrypted using conventional encryption technologies, such as secure sockets layer (SSL), transport layer security (TLS), virtual private networks (VPNs), Internet Protocol security (IPsec), etc. In other examples, the network 130 uses custom and/or dedicated data communications technologies instead of, or in addition to, the ones described above.

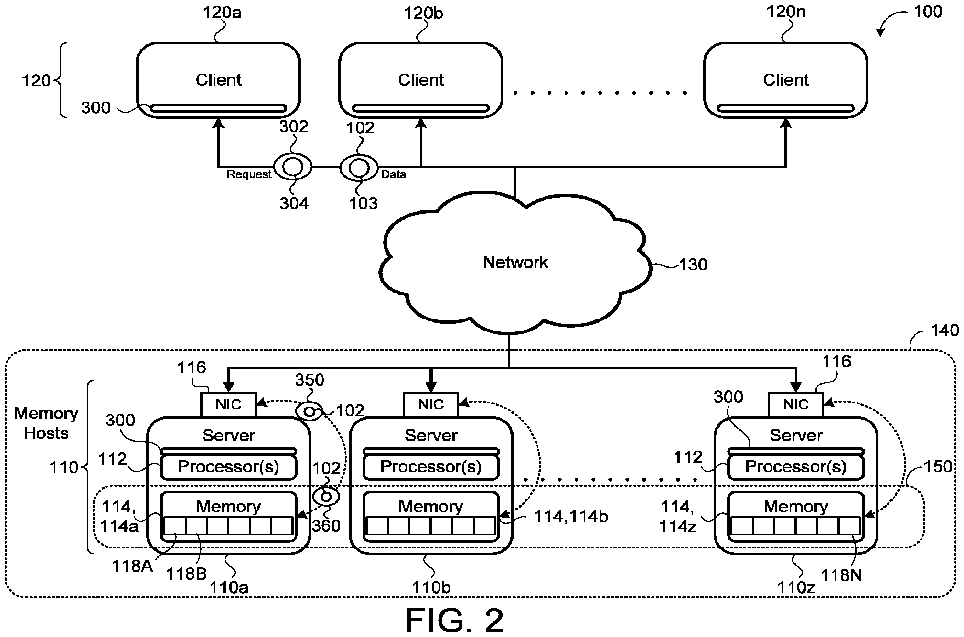

The data blocks 102 correspond to atomic units of data and each have size B bytes each. For example, a typical value for B for storage on a distributed system may be 64 KB to 256B. A notation N denotes a total number of the data blocks 102 associated with the client 104 and stored on the storage abstraction 150 using Oblivious Random Access Memory (O-RAM). Thus, N may refer to the capacity of the O-RAM on the storage abstraction 150. Each of the N data blocks 102 is stored at a corresponding memory location 118, 118A-N (FIG. 2) of the storage abstraction 150 overlain across the memory hardware 114.

While traditional encryption schemes provide confidentiality, the traditional encryption schemes are ineffective at hiding data access patterns which may reveal very sensitive information to the untrusted distributed system 140. Moreover, the traditional encryption schemes allow the client 104 to search for encrypted data 102 stored on the distributed system 140 only if the client 104 provides plain text access for the data 102 to the distributed system 140. As the client device 120 originates the data 102, the client device 120 is considered trusted. In some implementations, the client device 120 and the distributed system 140 execute an oblivious permutation routine 300 for oblivious moving the encrypted data blocks 102 around the storage abstraction 150 to completely hide data access patterns (which data blocks 102 were read/written) from the distributed system 140.

Execution of the oblivious permutation routine 300 requires $(4+\varepsilon)N$ block accesses while only requiring $O(\sqrt{N})$ storage capacity at the client memory 122. The routine 300 may achieve a bandwidth of about 2.2N to provide an amortized cost equal to about $2.2\sqrt{N}$ accesses (e.g., a read access or a write access) to the data stored on the storage abstraction 150.

At the untrusted side, the distributed system 140 may receive an oblivious permutation request 302 from the trusted client device 120 to initiate the oblivious permutation routine 300. For instance, the oblivious permutation routine 300 may cause the distributed system 140 to allocate new memory locations 118 of the storage abstraction 150 for storing re-permuted data blocks 102 and organize/divide/partition the storage abstraction 150 into multiple data buckets 350, 350a-n. In some implementations, the oblivious permutation routine 300 organizes the storage abstraction 150 into n data buckets 350 each containing n data blocks 102, whereby the value n is equal to the square root of the N data blocks 102 (i.e., $n=\sqrt{N}$). For instance, the routine may organize the storage abstraction 150 by dividing the memory locations 118 into the substantially n data buckets 350 each containing substantially n data blocks 102. In some examples, the n data blocks 102 are randomly assigned to each data bucket 350 by permutations performed at the client device 120 during a previous oblivious permutation routine 300. Accordingly, the division of the storage abstraction 150 into the n data buckets 350 is obscure/oblivious to the untrusted distributed system 140. The smaller data buckets 350 subdivide the O-RAM of the storage abstraction 150 to increase bandwidth when the distributed system 140 and the client device 120 are performing permutation operations during execution of the oblivious permutation routine 300. Moreover, the oblivious permutation routine 300 may allocate substantially n buffer buckets 360, 360a-n associated with the new memory locations 118.

In the present invention, substantially $\sqrt{N}$ encompasses a range of values, such as between $N^{0.1}$ and $N^{0.75}$. In additional examples, substantially $\sqrt{N}$ includes: $N^{0.5}$, which provides an algorithm with one round-trip); $N^{1/3}$, which provides an algorithm with 2 round-trips; and $N^{0.20}$, which provides an algorithm with 4 round-trips. Relatively smaller values, may be less useful, since N could be impractically large. For relatively larger values, the gain in the algorithm may be less useful as well.

At the trusted side, the client device 120 may iteratively download each of the n data buckets 350 one at a time from the distributed system 140 and allocates substantially n cache slots 370, 370a-n on the memory hardware 122 while executing the oblivious permutation routine 300. Each cache slot 370 is associated with a corresponding buffer bucket 360 allocated by the routine 300 at the distributed system 140. For each data bucket 350 received, the client device 120 applies a random permutation on the n data blocks 102 within the corresponding data bucket 350 to generate permuted data blocks and determines a corresponding buffer bucket 360 and a corresponding cache slot for each permuted data block 102. The client device 120 provides each of the permutated data blocks 102 into the corresponding cache slot 370 associated with the corresponding buffer bucket 360. Here, the cache slots 370 may temporarily store the recently permutated data blocks 102 at the memory hardware 122 of the client device 120 until the data blocks 102 are uploaded/sent to the distributed system 140 for storage at the new memory locations 118. Some of the data blocks 102 may upload from their respective cache slot 370 to the corresponding new memory location 118 before preceding to the next iteration of downloading a subsequent data bucket 350. In some examples, the cache slots 370 collectively provide a storage capacity of n permutated data blocks 102 at any given time. However, the memory hardware 122 at the client device 120 may additionally store miscellaneous states and information, such as cryptographic keys for authentication, encryption, and pseudo-random permutations.

During the current iteration, for each buffer bucket 360, the client device 120 is further configured to determine a quantity of data blocks to be sprayed into the buffer bucket 360 and a strategy for selecting data blocks to be sprayed into the buffer bucket 360 from at least one of: corresponding permutated data blocks 102, cached permutated data blocks 102 from the corresponding cache slot 370; or dummy data blocks 103. Subsequently, the client device 120 sprays/evicts (i.e., upload) the selected data blocks into the buffer buckets 360 according to the strategy, store any unselected permutated data blocks in their corresponding cache slots, and remove any selected cached permutated data blocks 102 from their corresponding cache slots 370. In some implementations, the strategy for selecting the quantity of data blocks to be sprayed into each corresponding buffer bucket 360 follows a strict priority order that includes: first, selecting from the corresponding permutated data blocks 102; second, selecting from the cached permutated data blocks 102 from the corresponding cache slot 370; and third, selecting dummy data blocks 103.

In some examples, the quantity of data blocks to be sprayed into a buffer bucket 360 corresponds to a threshold value k that may be any value independent from the number of permutated data blocks corresponding to the buffer bucket 360. Thus, the threshold value k may be any value independent of the number of data blocks 102 currently residing at the client device 120 (i.e., stored in the cache slots 370). The threshold value k must be large enough so that the client device 120 is never storing more than n data blocks 102 at any given point in time. However, the threshold value k must also be small enough to have unselected data blocks 102 leftover from spray iterations and stored in the corresponding cache slots 370. For instance, larger threshold values k (e.g., k> O(log N / log log N)) result in all data blocks 102 being selected after permutation and sprayed with a very high probability (but not guaranteed) of not having leftover/unselected blocks stored in the client cache slots 370. The threshold value k may change during each iteration or may change every $i^{th}$ iteration in a repeating or non-repeating fashion. Any unselected data blocks 102 are not sprayed during the current spray iteration and may be stored in their corresponding cache slots 370 until a subsequent spray iteration (i.e., after the client device 120 subsequently downloads one or more data buckets 350). In some examples, the quantity of data blocks to be sprayed (i.e., selected data blocks) into one buffer bucket 360 is different than the quantity of data blocks to be sprayed into another buffer bucket 360 during the same iteration. Moreover, the quantity of data blocks to be sprayed into one buffer bucket 360 may be different than the quantity of data blocks to be sprayed into another bucket 360 between separate iterations.

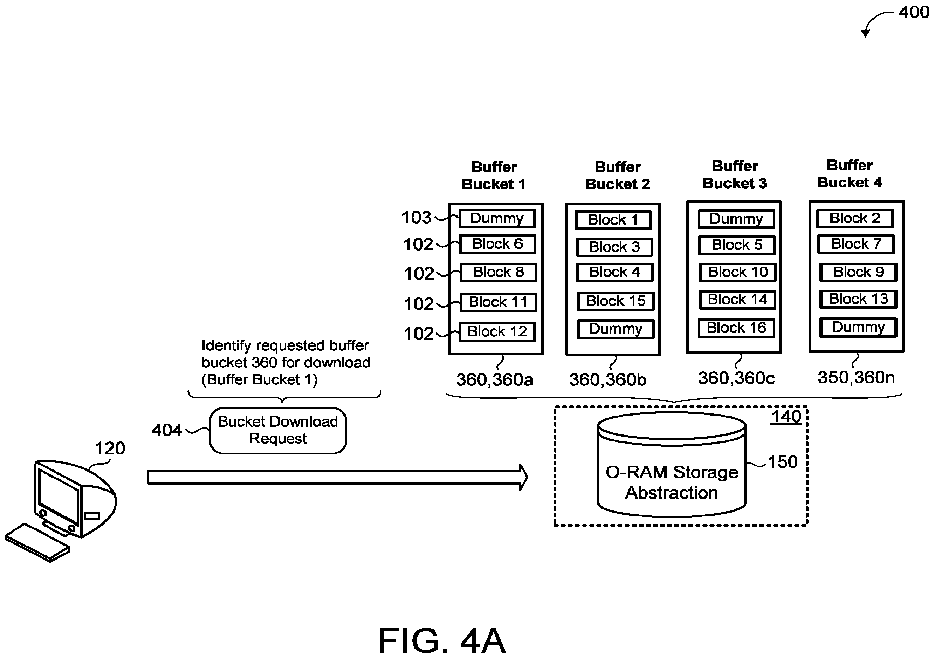

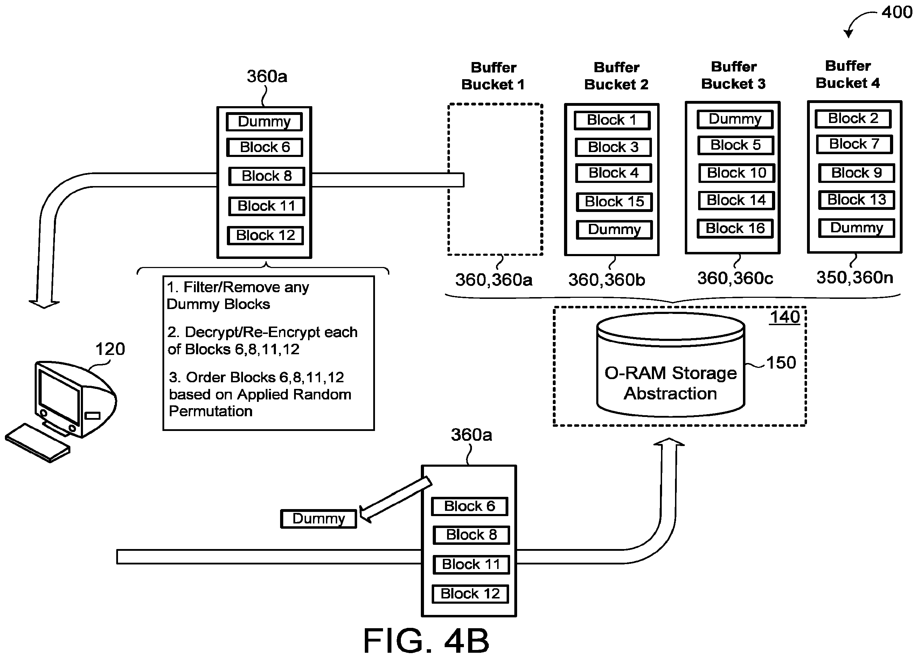

In some examples, when a cache slot 370 includes zero data blocks 102 or a number of data blocks 102 less than the threshold value k, the routine 300 causes the client device 120 to spray the one or more dummy blocks 103 to make up the difference between k and the number of data blocks 102 within the corresponding cache slot 370. Thus, the "quantity of data blocks" sprayed may include all permutated data blocks 102, all dummy blocks 103, or a combination of one or more permutated data blocks 102 and one or more dummy blocks 103. In some examples, the client device 120 sprays up to the threshold value k over a series of two or more spray iterations. For instance, the client device 120 may spray one (1) data block 102 (e.g., or a dummy block 103 when the data block 102 is not available) during three (3) consecutive spray iterations and then spray two (2) data blocks 102 (e.g., or at least one dummy block 102 if less than two data blocks 102 are available) during a fourth iteration when the threshold value of k is equal to a value of 1.25. Similarly, a threshold value of k equal to 1.5 may result in client device 120 spraying one (1) data block 102 and then two (2) data blocks 102 every other iteration. The client device 120 may tag or pre-pend the data blocks 102 and/or the dummy blocks 103 so that dummy blocks 103 can be identified for removal during a recalibration stage 400 (FIGS. 4A and 4B).

Upon applying the random permutation on the n data blocks 102 from the corresponding downloaded bucket 350, selecting data blocks to be sprayed into each buffer bucket according to the strategy, spraying the selected data buckets into their corresponding buffer buckets 360, and storing any unselected permutated data blocks 102 at the cache slots 370, the client device 120 may download the next n data bucket 350 and repeat the application of the random permutation and spraying/storing as set forth above during the next iteration. After downloading the last n data bucket 350 and applying the random permutation on the n data blocks 102 associated therewith, the client device 120 sprays the quantity of selected data blocks 102 according to the strategy into their corresponding buffer buckets 360. With all of the N data blocks now randomly assigned to their corresponding new memory locations 118 allocated in the memory 114 and residing within the corresponding buffer buckets 360, the oblivious permutation routine 300 may cause the distributed system 140 to de-allocate the data buckets 350 associated with the old/stale memory locations 118.

During each spray iteration, the number of data blocks 102 and/or dummy blocks 103 within each of the buffer buckets 360 increases. After the last spray iteration (i.e., the $n^{th}$ spray iteration), the capacity of each of the n buffer buckets 360 includes the n data blocks 102 as well as any dummy blocks 103 sprayed to compensate for iterations when the number of data blocks 102 within a corresponding cache slot 370 is less than the threshold value k. In some implementations, the oblivious permutation routine 300 includes a recalibration stage 400 (FIGS. 4A and 4B) whereby the client device 120 iteratively downloads each of the n buffer buckets 360 one at a time from the distributed system 140. Accordingly, the recalibration stage 400 includes n iterations or rounds. In the present invention , the client device 120 filters and removes all of the dummy blocks 103 contained within the corresponding buffer bucket 360 downloaded from the distributed system 140 during the current iteration. Additionally, the client device 120 again decrypts and re-encrypts each of the data blocks 102 within the corresponding buffer bucket 360 and then orders the data blocks 102 correctly before uploading the corresponding buffer bucket 360 back to the distributed system 140. Upon recalibrating each buffer bucket 360, the oblivious permutation routine 300 has successfully permutated the N items without revealing any portion of the permutation to the distributed system 140. Thus, re-encrypting of the data blocks 102 prevents the distributed system 140 from the ability to link the data blocks 102 based on their content.

Referring to FIG. 2, in some implementations, the distributed storage system 140 includes loosely coupled memory hosts 110, 110a-z (e.g., computers or servers), each having a computing resource 112 (e.g., one or more processors or central processing units (CPUs)) in communication with storage resources 114 (e.g., memory hardware, memory hardware, flash memory, dynamic random access memory (DRAM), phase change memory (PCM), and/or disks) that may be used for caching data. The storage abstraction 150 overlain on the storage resources 114 allows scalable use of the storage resources 114 by one or more user devices 120, 120a-n. The user devices 120 may communicate with the memory hosts 110 through the network 130 (e.g., via remote procedure calls (RPC)).

In some implementations, the distributed storage system 140 is "single-sided," eliminating the need for any server jobs for responding to RPC from user devices 120 to oblivious move data blocks 102 around the storage abstraction 150 when executing the oblivious permutation routine 300. "Single-sided" refers to the method by which most of the request processing on the memory hosts 110 may be done in hardware rather than by software executed on CPUs 112 of the memory hosts 110. Additional concepts and features related to a single-sided distributed caching system can be found in U.S. Patent 9,164,702.

The distributed system 140 may obliviously move data blocks 102 around the storage resources 114 (e.g., memory hardware) of the remote memory hosts 110 (e.g., the storage abstraction 150) and get the data blocks 102 from the remote memory hosts 110 via RPCs or via remote direct memory access (RDMA)-capable network interface controllers (NIC) 116. A network interface controller 116 (also known as a network interface card, network adapter, or LAN adapter) may be a computer hardware component that connects a computing device/resource 112 to the network 130. Both the memory hosts 110a-z and the user device 120 may each have a network interface controller 116 for network communications. The oblivious permutation routine 300 executing on the physical processor 112 of the hardware resource 110 registers a set of remote direct memory accessible regions/locations 118A-N of the memory 114 with the network interface controller 116. Each memory location 118 is configured to store a corresponding data block 102. The routine 300 further allocates new memory locations 118 to store each corresponding data block 102 permutated by the client device 120. Once all the data blocks 102 are re-permutated and dummy blocks 103 are filtered out and removed, the routine 300 may de-allocate the stale memory locations 118 from which the re-permutated data blocks 102 were obviously moved from. For instance, the client device 120 may tag the data blocks 102 and/or the dummy blocks 103 when spraying into the corresponding buffer buckets 360 so that the dummy blocks 103 can be identified for removal during the recalibration stage 400.

In some implementations, the client device 120 transmits an oblivious permutation request 302 to instruct the data processing hardware 112 of the hardware resource 110 to execute the oblivious permutation routine 300 for obliviously moving the data blocks 102 stored at the memory 114 to new memory locations 118. The routine 300 may divide the new memory locations 118 into the n data buckets 350 each containing n data blocks 102 and the client device 120 may issue a bucket download request 304 over the distributed system 140 to download each data bucket 350 one at a time. The NIC 116 may retrieve the requested data bucket 350 and the corresponding n data blocks 102 from the storage abstraction 150 and provide the requested data bucket 350 to the client device 120. Downloading the data buckets 350 in isolation allows the client device 120 to apply the random permutation on only n data blocks 102 at a time to reduce the load on the client device 120 as well as reduce the amount of data stored at the client memory hardware 122 (i.e., within the cache slots 370). During each spray iteration, the client device 120 may spray up to the threshold value k of data blocks 102 and/or dummy blocks 103 into the corresponding buffer buckets 360 associated with the new memory locations 118 at the distributed system 140.

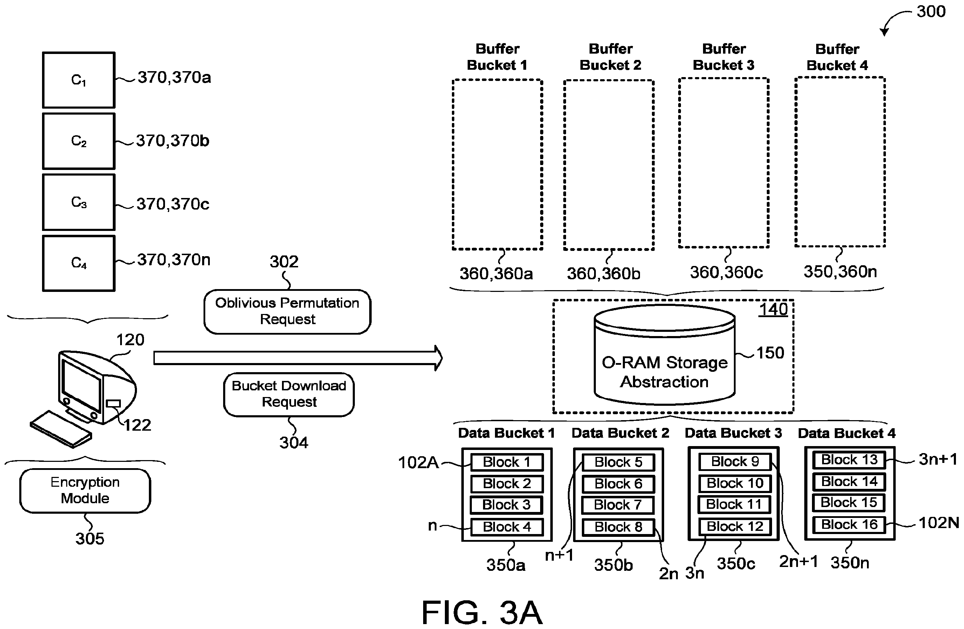

FIGS. 3A-3J provide an example oblivious permutation routine 300 executing on the client device 120 and the distributed system 140 to obliviously move data blocks 102 stored on the distributed system 140. Referring to FIG. 3A, the client device 120 transmits the oblivious permutation request 302 to the distributed system 140 for obliviously moving data blocks 102AN stored on the O-RAM storage abstraction 150 overlain on the memory hardware 114 of the distributed system 140. The data blocks 102A-N may be owned and encrypted by the client device 120 using client-side keys and searchable, via queries, without giving a service provider of the distributed system 140 plain text access to the stored data. For simplicity, the N data blocks 102 is equal to sixteen (16). In some examples, the client 104 corresponds to an enterprise or an employee of the enterprise. The distributed system 140 divides/partitions the current memory locations 118 of the storage abstraction 150 into n data buckets 350a, 350b, 350c, 350n that each contain n data blocks 102. Thus, the current memory locations 118 are divided/partitioned into four (4) data buckets 350a-350n each containing four (4) data blocks 102. In the example shown, data blocks 1-4 reside in the first data bucket 350a, data blocks 5-8 reside in the second data bucket 350b, data blocks 9-12 reside in the third data bucket 350c, and data blocks 13-16 reside in the fourth data bucket 350n. The distributed system 140 further allocates new memory locations 118 in the storage abstraction 150 for storing the N blocks 102 after permutation and initializes n buffer buckets 360a, 360b, 360c, 360d associated with the new memory locations 118. The client device 120 simultaneously allocates/initializes n cache slots 370a, 370b, 370c, 370n in the client memory hardware 122 each associated with a corresponding buffer bucket 360a, 360b, 360c, 360n of the storage abstraction 150. The client device 120 may transmit a bucket download request 304 to the distributed system 140 requesting to download one of the data buckets 350 and apply the random permutation on the n data blocks 102 residing in the requested data bucket 350. The client device 120 may iteratively send the bucket download request 304 each time the client device 120 is ready to apply the random permutation on the n data blocks 102 residing in the next data bucket 350.

The client device 120 may execute an encryption module 305 or access the encryption module 305 to randomly select an Advanced Encryption Standard (AES) key for use in applying the random permutation on the data blocks 102 as well as encrypting, decrypting, and re-encrypting the data blocks 102. Accordingly, the encryption module 305 may provide a randomly generated key (e.g., an AES key) for obliviously moving the data blocks 102 to new memory locations 118 of the storage abstraction 150 without revealing the permutation to the distributed system 140. In some examples, the randomly generated key is temporary and new keys are randomly generated each time the data blocks 102 are re-permutated.

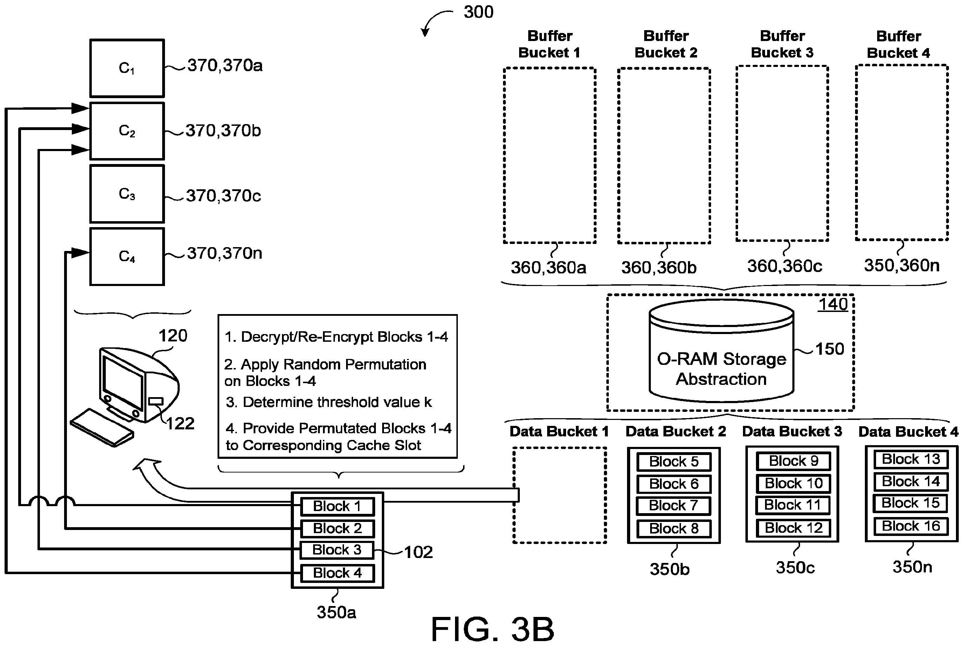

Referring to FIG. 3B, the distributed system 140 provides the first data bucket 350a to the client device 120 in response to receiving the bucket download request 304. In the example shown, the data bucket 350a contains n data blocks 102 (Blocks 1-4). In response to receiving the data bucket 350a from the distributed system 140, the client device 120 applies a random permutation on the n data blocks 102 (Blocks 1-4) to determine the corresponding new memory location 118A-N and the corresponding buffer bucket 360a-n associated with each permutated data block 102. In some examples, the client device 120 applies the random permutation by decrypting and re-encrypting each of the n data blocks 102 received within the first data bucket 350a, and applying the random permutation on the re-encrypted n data blocks 102. For instance, the client device 120 may use the randomly generated key (i.e., AES key) provided from the encryption module 305 (FIG. 3A) to obfuscate the permutation from the distributed system 140. In some examples, the random permutation applied by the client device 120 includes shuffling the re-encrypted n data blocks (Blocks 1-4) using a cryptographically secure random key hidden from the distributed system 140.

Moreover, the client device 120 randomly selects the threshold value k for use in spraying the re-permutated data blocks 102 into their assigned buffer buckets 360 of the memory hardware 114 at the distributed system 140. The threshold value k may be randomly selected independent of the data currently stored at the client device 120, i.e., independent of the load of each cache slot 370, and independent of the number of permutated data blocks 102 corresponding to each buffer bucket 360. For each buffer bucket 360, the client device 120 may execute a separate process/routine to determine a quantity of data blocks (e.g., threshold value k) to be sprayed into the buffer bucket and a strategy for selecting data blocks to be sprayed into the buffer bucket from at least one of: corresponding permutated data blocks; cached permutated data blocks from the corresponding cache slot; or dummy data blocks. In some examples, the client device 120 executes the separate process/routine for determining the quantity of data blocks to be sprayed into each buffer bucket 360 when the client device 120 applies the random permutation on the re-encrypted data blocks 102. The threshold value k must be large enough to prevent the number of data blocks 102 locally stored at the cache slots 370 of the client memory hardware 122 from exceeding the value n (i.e., n=4 data blocks 102 in the example shown). In the example oblivious permutation routine 300 of FIGS.

3A-3J, the threshold value k is equal to 1.25 such that the sequence of data blocks 102 and/or dummy blocks 103 sprayed into the buffer buckets 360 during the n spray iterations (i.e., n=4) is 1, 1, 1, 2. However, any sequence achieving the threshold value k equal to 1.25 during the n iterations may be used.

After the data blocks 102 (Blocks 1-4) are permutated, the client device 120 provides each permutated data block 102 into the corresponding cache slot 370 of the client memory hardware 122. In the example shown, the second cache slot $C_2$ 370b receives Blocks 1, 3 and 4 and the fourth cache slot $C_4$ 370n receives Block 2. The first cache slot $C_1$ 370a and the third cache slot $C_3$ 370c do not receive any data blocks 102 during the current iteration as the random permutation applied to the first data bucket 350a did not assign any of the data blocks 102 to any of the new memory locations 118 associated with the first and third buffer buckets 360a, 360c.

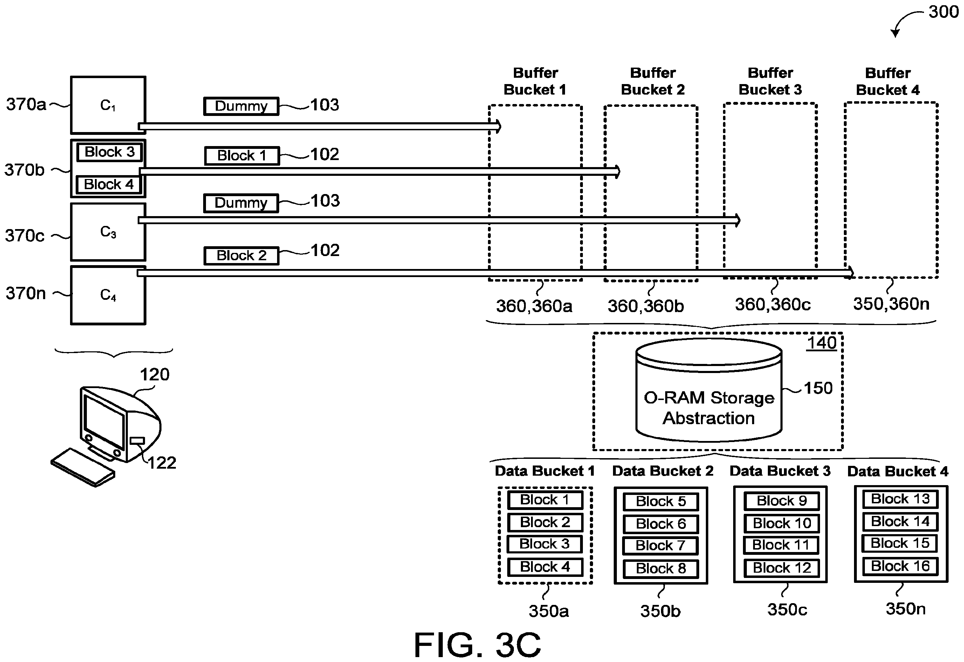

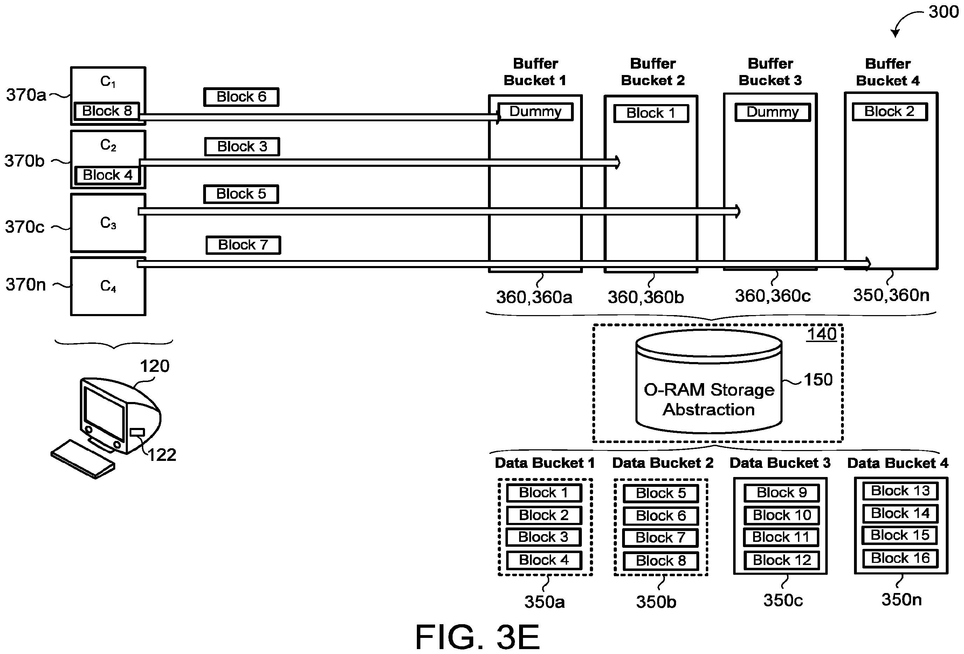

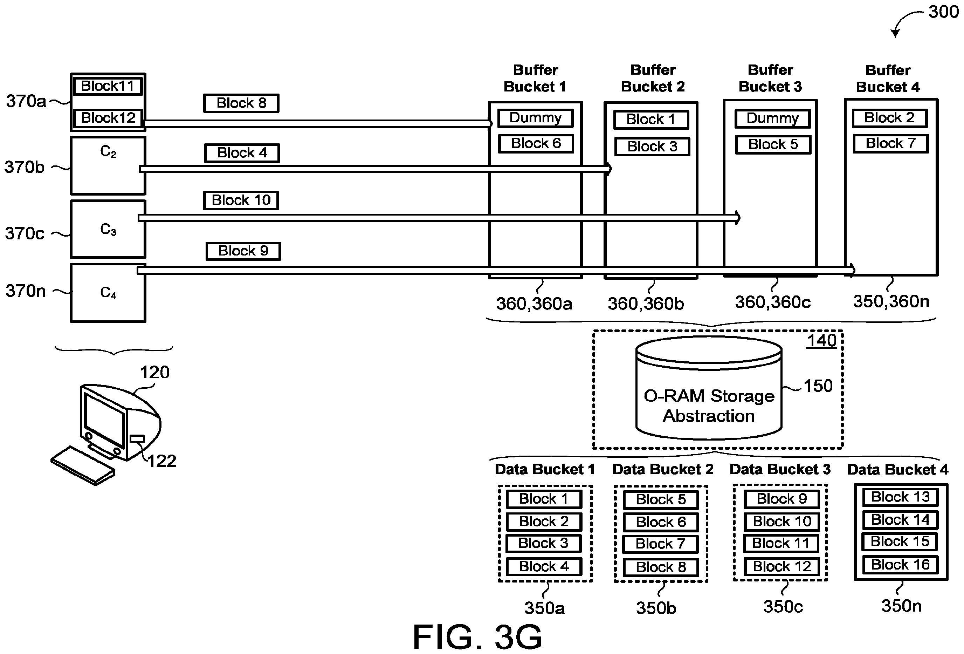

Referring to FIG. 3C, the client device 120 executes a first spray iteration (also referred to as a spray round) to spray/evict up to the threshold value k of the permutated data blocks 102 (Blocks 1-4) from each cache slot 370 into the corresponding buffer buckets 360. As the threshold value k is equal to 1.25 in the example, the client device 120 will spray up to one (1) data block 102 from each cache slot 370a, 370b, 370c, 370n during the first spray iteration (and also the second and third spray iterations (FIGS. 3E and 3G)). In some examples, the client device 120 sprays a number of the permutated data blocks 102 equal to the threshold value k (i.e., the selected quantity of data blocks) from a corresponding cache slot 370 when the corresponding cache slot 370 contains at least the threshold value k of the permutated data blocks. For instance, the client device 120 sprays/evicts one (1) data block 102 (Block 1) from the second cache slot $C_2$ 370b into the second buffer bucket 360b since the second cache slot $C_2$ 370b is presently storing three data blocks 102. Likewise, the client device 120 sprays/evicts one (1) data block 102 (Block 2) from the fourth cache slot $C_4$ 370d into the fourth buffer bucket 360n since the fourth cache slot $C_4$ 370d is presently storing one data blocks 102.

In some implementations, the permutation routine 300 also identifies any cache slots 370 containing a number of permutated data blocks 102 less than the threshold value k, and sprays/evicts a number of dummy blocks 103 into the corresponding buffer bucket 360 based on a difference between the threshold value k and the number of permutated data blocks 102 within the corresponding cache slot 370. Thus, the dummy blocks 103 represent meaningless data blocks to not reveal to the distributed system 140 that a cache slot 370 is empty during a current iteration. Since the first cache slot $C_1$ 370a and the third cache slot $C_3$ 370c are not presently storing any data blocks 102, the client device 120 sprays/evicts one dummy block 103 into each of the first and third buffer buckets 360a, 360c. The client device 120 may encrypt the dummy blocks 103 similar to the data blocks 102. The dummy blocks 103 may reside in the cache slots 370 or may be generated by the client device during each spray iteration as needed. The sending of dummy blocks 103 is a security measure to conceal the age of data blocks 102 stored in the storage abstraction 150 from the untrusted distributed system 140. Additionally, the sending of encrypted dummy blocks 103 conceals which cache slots 370 contain data blocks 102 and which cache slots 370 are empty during each spray iteration as a security measure to linkability attacks on the distributed system 140.

The cache slots 370 allow recently permutated data blocks 102 each associated with an assigned buffer bucket 360 to be temporarily stored locally at the client device 120 until the routine 300 is ready to spray/evict the data blocks 102 into their corresponding buffer buckets 360. The cache slots 370a-n collectively provide a queue for the client device 120 that maps each permutated data block 102 to the corresponding new memory location 118 at the storage abstraction 150 of the distributed system 140. Accordingly, each data block 102 currently residing in one of the cache slots 370 corresponds to an up-to-date version associated with a new memory location 118 that is oblivious to the distributed system 140.

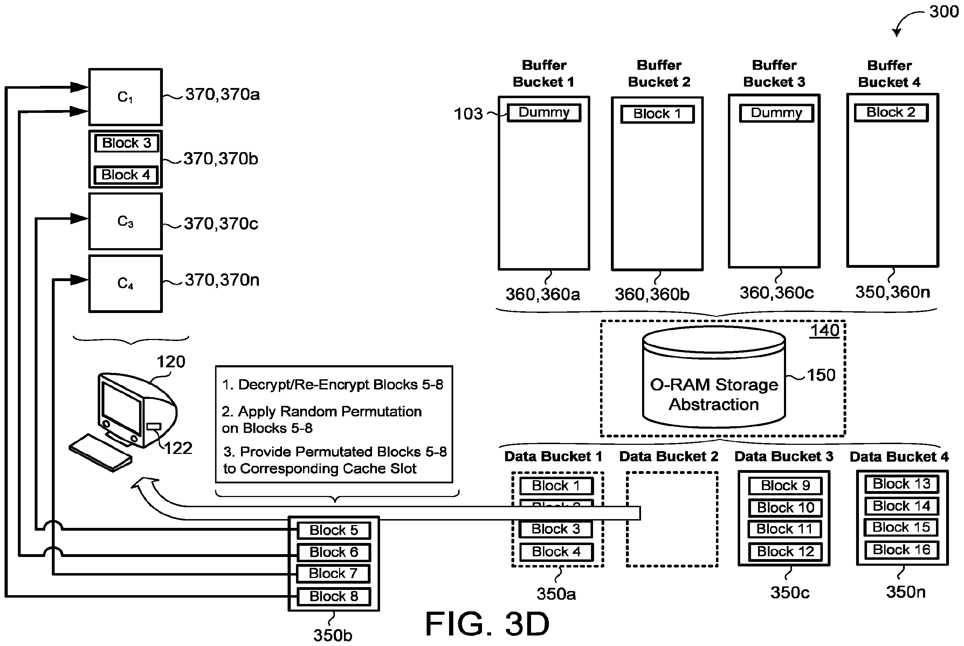

Referring to FIG. 3D, the distributed system 140 provides the second data bucket 350b to the client device 120 for the next iteration in response to receiving a next bucket download request 304 from the client device 120. In the example shown, the first and third buffer buckets 360a, 360c contain dummy blocks 103, the second buffer bucket 360b contains the data block 102 (Block 1), and the fourth buffer bucket 360d contains the data block 102 (Block 2) evicted from the client cache slots 370 during the previous spray iteration. Moreover, the client device 120 is configured to store any remaining permutated data blocks 102 in their corresponding cache slots 370 that are left over after one or more previous spray iterations. In the example shown, the second cache slot $C_2$ 370b is temporarily storing two permutated data blocks 102 (Blocks 3 and 4) left over from the previous spray iteration.

The downloaded second bucket 350b contains n data blocks 102 (Blocks 5-8). As with the first bucket 350a, the permutation routine 300 causes the client device 120 to apply a random permutation on the n data blocks 102 (Blocks 5-8) to determine the corresponding new memory location 118A-N and the corresponding buffer bucket 360a-n associated with each permutated data block 102. Here, the client device 120 decrypts and re-encrypts each data block (Blocks 5-8) and applies the random permutation on the re-encrypted data blocks 102 by locally shuffling the order of the re-encrypted data blocks 102 using random bits hidden from the distributed system based on the previous or a new randomly generated key (i.e., AES key). Thereafter, the client device 120 provides each permutated data block 102 into the corresponding cache slot 370 of the client memory hardware 122. In the example shown, the first cache slot $C_1$ 370a receives Blocks 6 and 8, the third cache slot $C_3$ 370c receives Block 5, and the fourth cache slot $C_4$ 370n receives Block 7. The second cache slot $C_2$ 370b does not receive any data blocks 102 during the current iteration as the random permutation applied to the second data bucket 350b did not assign any of the data blocks 102 to any of the new memory locations 118 associated with the second buffer bucket 360b.

Referring to FIG. 3E, the client device 120 executes a second spray iteration to spray/evict up to the threshold value k of the permutated data blocks 102 (Blocks 3-8) from each cache slot 370 into the corresponding buffer buckets 360. As the threshold value k is equal to 1.25 in the example to provide the iterative spray sequence of 1, 1, 1, 2, the client device 120 will spray up to one (1) data block from each cache slot 370a, 370b, 370c, 370n during the current second spray iteration. For instance, the client device 120 sprays/evicts data block (Block 6) from the first cache slot $C_1$ 370a into the first buffer bucket 360b, data block (Block 3) from the second cache slot $C_2$ 370b into the second buffer bucket 360b, data block 102 (Block 5) from the third cache slot $C_3$ 370c into the third buffer bucket 360c, and data block 102 (Block 7) from the fourth cache slot $C_4$ 370n into the fourth buffer bucket 360n.

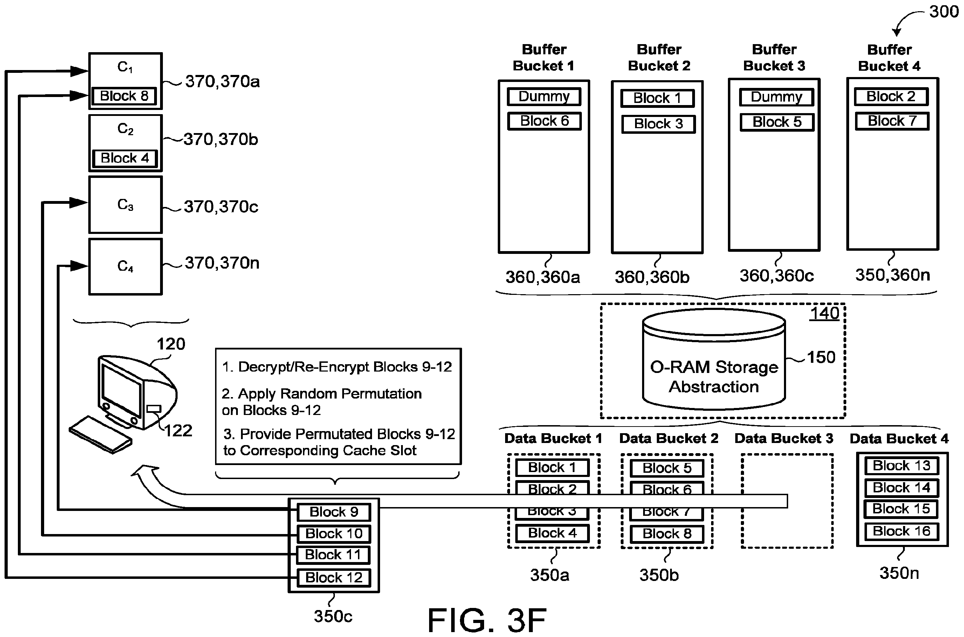

Referring to FIG. 3F, the distributed system 140 provides the third data bucket 350c to the client device 120 for the next iteration (i.e., 3rd iteration) in response to receiving a next bucket download request 304 from the client device 120. The first buffer bucket 360a contains one dummy block 103 and one data block (Block 6), the second buffer bucket 360b presently contains two data blocks (Blocks 1 and 3), the third buffer bucket 360c contains one dummy block 103 and one data block (Block 5), and the fourth buffer bucket 360n contains two data blocks (Blocks 2 and 7). Moreover, the client device 120 is configured to store any remaining permutated data blocks 102 in their corresponding cache slots 370 that are left over after one or more previous spray iterations. In the example shown, the first cache slot $C_1$ 370a temporarily stores one data block 102 (Block 8) and the second cache slot $C_2$ 370b temporarily stores one data block 102 (Block 4) left over from one or more previous spray iterations.

In response to receiving the downloaded third bucket 350c containing n data blocks 102 (Blocks 9-12), the permutation routine 300 causes the client device 120 to apply a random permutation on the n data blocks 102 (Blocks 9-12) to determine the corresponding new memory location 118A-N and the corresponding buffer bucket 360a-n associated with each permutated data block 102. Here, the client device 120 decrypts and re-encrypts each data block (Blocks 9-12) and applies the random permutation on the re-encrypted data blocks 102 by locally shuffling the order of the re-encrypted data blocks 102 using a cryptographically secure random key hidden from the the distributed system based on the previous or a new randomly generated key (i.e., AES key). Thereafter, the client device 120 provides each permutated data block 102 into the corresponding cache slot 370 of the client memory hardware 122. In the example shown, the first cache slot $C_1$ 370a receives Blocks 11 and 12, the third cache slot $C_3$ 370c receives Block 10, and the fourth cache slot $C_4$ 370n receives Block 9. As with the second iteration (by coincidence and example only), the second cache slot $C_2$ 370b does not receive any data blocks 102 during the current third iteration as the random permutation applied to the third data bucket 350c did not assign any of the data blocks 102 to any of the new memory locations 118 associated with the second buffer bucket 360b.

Referring to FIG. 3G, the client device 120 executes a third spray iteration to spray/evict up to the threshold value k of the permutated data blocks 102 (e.g., Blocks 4, and 8-12) from each cache slot 370 into the corresponding buffer buckets 360. As the threshold value k is equal to 1.25 in the example to provide the iterative spray sequence of 1, 1, 1, 2, the client device 120 will spray up to one (1) data block from each cache slot 370a, 370b, 370c, 370n during the current third spray iteration. For instance, the client device 120 sprays/evicts data block (Block 8) from the first cache slot $C_1$ 370a into the first buffer bucket 360a, data block (Block 4) from the second cache slot $C_2$ 370b into the second buffer bucket 360b, data block 102 (Block 10) from the third cache slot $C_3$ 370c into the third buffer bucket 360c, and data block 102 (Block 9) from the fourth cache slot $C_4$ 370n into the fourth buffer bucket 360n. The client device 120 may select to spray one of the most recent permutated data blocks 102 (Block 11 or Block 12) into the first buffer bucket 360a instead of the cached permutated data block 102 (Block 8) from the first cache slot $C_1$ 370a.

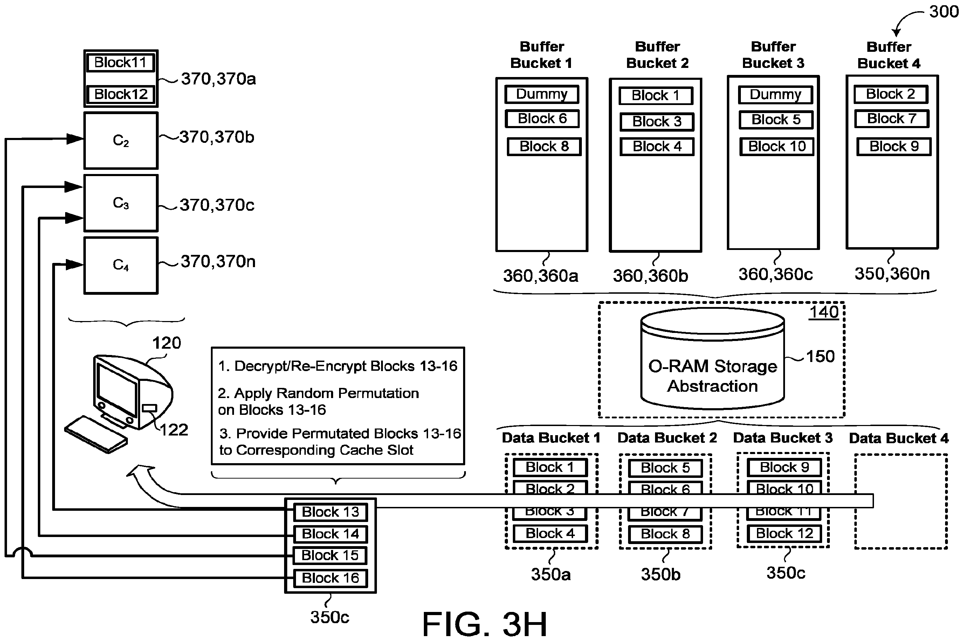

Referring to FIG. 3H, the distributed system 140 provides the fourth and final data bucket 350c to the client device 120 for the last iteration (i.e., 4th iteration) in response to receiving a next bucket download request 304 from the client device 120. The first buffer bucket 360a contains one dummy block 103 and two data block (Blocks 6 and 8), the second buffer bucket 360b presently contains three data blocks (Blocks 1, 3, and 4), the third buffer bucket 360c contains one dummy block 103 and two data blocks (Blocks 5 and 10), and the fourth buffer bucket 360n contains three data blocks (Blocks 2, 7 and 9). Moreover, the client device 120 is configured to store any remaining permutated data blocks 102 in their corresponding cache slots 370 that are left over after one or more previous spray iterations. In the example shown, the first cache slot $C_1$ 370a temporarily stores two data block 102 (Blocks 11 and 12) left over from the previous spray iteration. Thus, Blocks 11 and 12 correspond to previously unselected data blocks according to the strategy.

In response to receiving the downloaded fourth bucket 350n containing n data blocks 102 (Blocks 13-16), the permutation routine 300 causes the client device 120 to apply a random permutation on the n data blocks 102 (Blocks 13-16) to determine the corresponding new memory location 118A-N and the corresponding buffer bucket 360a-n associated with each permutated data block 102. Here, the client device 120 decrypts and re-encrypts each data block (Blocks 13-16) and applies the random permutation on the re-encrypted data blocks 102 by locally shuffling the order of the re-encrypted data blocks 102 using a cryptographically secure random key hidden from the distributed system based on the previous or a new randomly generated key (i.e., AES key). Thereafter, the client device 120 provides each permutated data block 102 into the corresponding cache slot 370 of the client memory hardware 122. In the example shown, the second cache slot $C_2$ 370b receives Block 15, the third cache slot $C_3$ 370c receives Blocks 14 and 16, and the fourth cache slot $C_4$ 370n receives Block 13. The first cache slot $C_1$ 370a does not receive any data blocks 102 during the current fourth iteration as the random permutation applied to the fourth data bucket 350n did not assign any of the data blocks 102 to any of the new memory locations 118 associated with the first buffer bucket 360a.

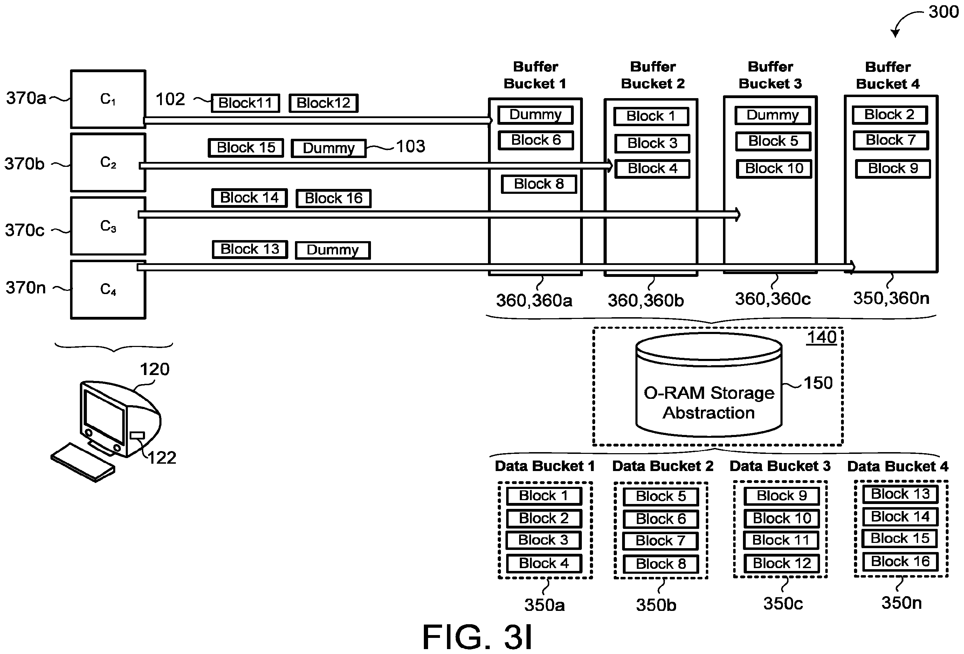

Referring to FIG. 3I, the client device 120 executes a final fourth spray iteration to spray/evict up to the threshold value k of the permutated data blocks 102 (e.g., Blocks 11-14) from each cache slot 370 into the corresponding buffer buckets 360. As the threshold value k is equal to 1.25 in the example to provide the iterative spray sequence of 1, 1, 1, 2, the client device 120 will spray up to two (2) data blocks from each cache slot 370a, 370b, 370c, 370n during the current fourth spray iteration. For instance, the client device 120 sprays/evicts data blocks (Block 11 and 12) from the first cache slot $C_1$ 370a into the first buffer bucket 360b, data block (Block 15) from the second cache slot $C_2$ 370b into the second buffer bucket 360b, data blocks 102 (Block 14 and 16) from the third cache slot $C_3$ 370c into the third buffer bucket 360c, and data block 102 (Block 13) from the fourth cache slot $C_4$ 370n into the fourth buffer bucket 360n. In the example shown, the permutation routine 300 identifies, during the fourth iteration, that each of the second cache slot $C_2$ 370b and the fourth cache slot $C_4$ 370n each contain one data block 102, and therefore requires the current spray iteration to spray dummy blocks 103 to make up the difference from the threshold value k which is equal to "2" during the last spray iteration. Accordingly, the routine 300 causes the client device 120 to spray/evict one dummy block 103 with the one data block (Block 15) into the second buffer bucket 360b and one dummy block 103 with the one data block (Block 13) into the fourth buffer bucket 360n. Accordingly, the dummy blocks 103 obfuscate the fact that the cache slots 370b, 370n only contain one data block 102 each from the distributed system 140.

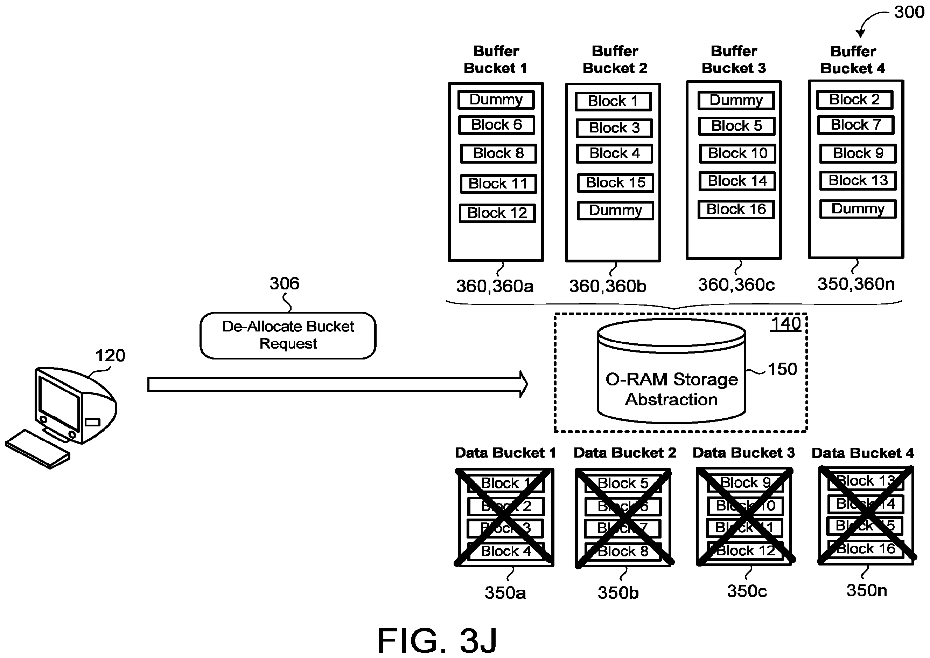

After the final spray iteration, all of the data blocks 102 permutated by the oblivious permutation routine 300 executing on the client device 120 are evicted from the cache slots 370 of the client memory hardware 122 and now reside in their corresponding buffer buckets 360. However, other examples may include the cache slots 370 still storing some permutated data blocks 102 after the last spray iteration. In these examples, any remaining permutated data blocks 102 leftover and stored at their corresponding cache slots 370 may be combined with the data blocks 102 previously sprayed into the corresponding buffer bucket 360 during the recalibration stage 400. FIG. 3J shows the permutation routine 300 causing the client device 120 to send/transmit a de-de-allocate bucket request 306 to the distributed system 140 to de-allocate each of the stale/old data buckets 350a-350n from the O-RAM storage abstraction 150 overlain on the memory hardware 114 of the distributed system 140. In the example shown, each of the buffer buckets 360a-n contain n permutated data blocks 102 (e.g., n=4) and one or more dummy blocks 103. The oblivious permutation routine 300 may further include a recalibration process 400 (FIGS. 4A and 4B) that iteratively recalibrates each of the virtual buckets 360a-n on an individual basis to filter out and remove all any dummy blocks and order the data blocks 102 according to the applied permutation.

FIGS. 4A and 4B provide an example recalibration process 400 executing on the client device 120 and the distributed system 140 to re-calibrate the virtual buckets 360a-n containing the most recent permutations of the data blocks 102. Referring to FIG. 4A, the client device 120 may transmit a buffer bucket download request 404 to the distributed system 140 requesting to download one of the buffer buckets 360 filled with permutated data blocks 102 and at least one dummy block 103 during the permutation routine 300 and recalibrate the requested buffer bucket 360 to include only the assigned data blocks 104 ordered according to the applied permutation. The client device 120 may iteratively send the buffer bucket download request 404 each time the client device 120 is ready to recalibrate the next buffer bucket 360. Accordingly, each request 404 may identify the requested buffer bucket 360 for download from the distributed system 140. In the example shown, the client device 120 sends the bucket download request 404 to download the first buffer bucket 360a for download during a first recalibration iteration of the recalibration process.

Referring to FIG. 4B, the recalibration process 400 causes the distributed system 140 to provide the first buffer bucket 360a to the client device 120 in response to receiving the buffer bucket download request 404 from the client device 120 requesting the first buffer bucket 360a. The buffer bucket 360a includes n data blocks 102 (Blocks 6, 8, 11, 12) and one dummy block 103 sprayed/evicted from the first client cache slot Ci 370a during the n spray iterations of the oblivious permutation routine 300 of FIGS. 3A-3J. In response to receiving the buffer bucket 360a from the distributed system 140, the client device 120 recalibrates the buffer bucket 360a by first filtering out and removing any dummy blocks 103 and then decrypting/re-encrypting each of the n data blocks 102 (Blocks 6, 8, 11, 12) received within corresponding buffer bucket 360a. With the dummy block(s) 103 removed and the n data blocks 102 again re-encrypted, the client device 120 may order the re-encrypted data blocks (Blocks 6, 8, 11, 12) according to the random permutation applied during execution of the oblivious permutation process 300 to complete the recalibration of the buffer bucket 360a. Thereafter, the client device 120 uploads the recalibrated buffer bucket 360a including only the n data blocks 102 to the O-RAM storage abstraction 150 of the distributed system 140 for storage on each corresponding new memory location 118A-N of the memory hardware 114. The client device 120 may then iteratively send/transmit the next buffer bucket download request 404 to the distributed system 140 for iteratively recalibrating each of the remaining buffer buckets 360b, 360c, 360n on an individual basis.

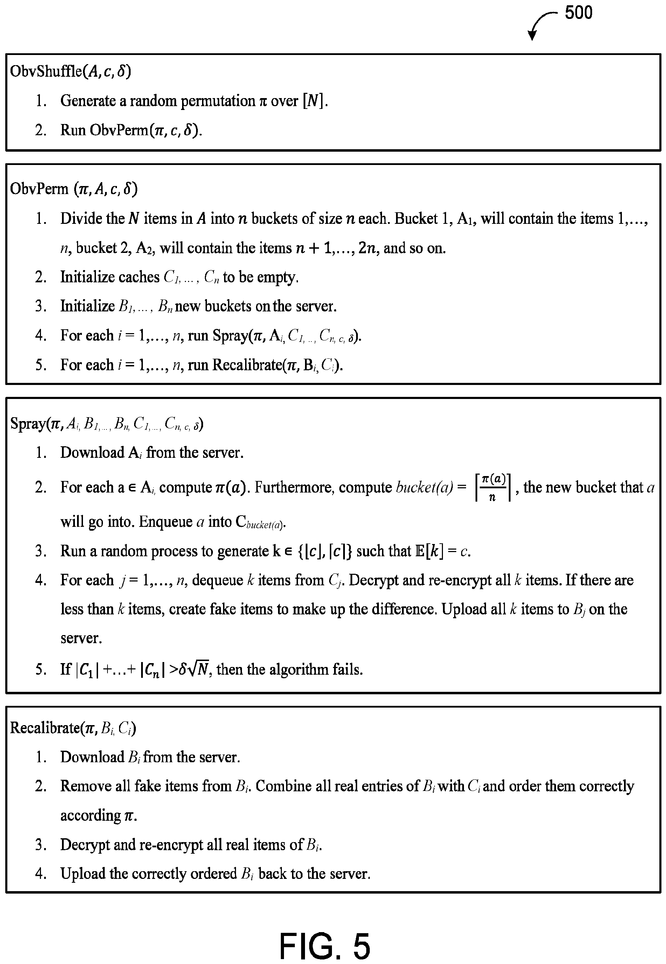

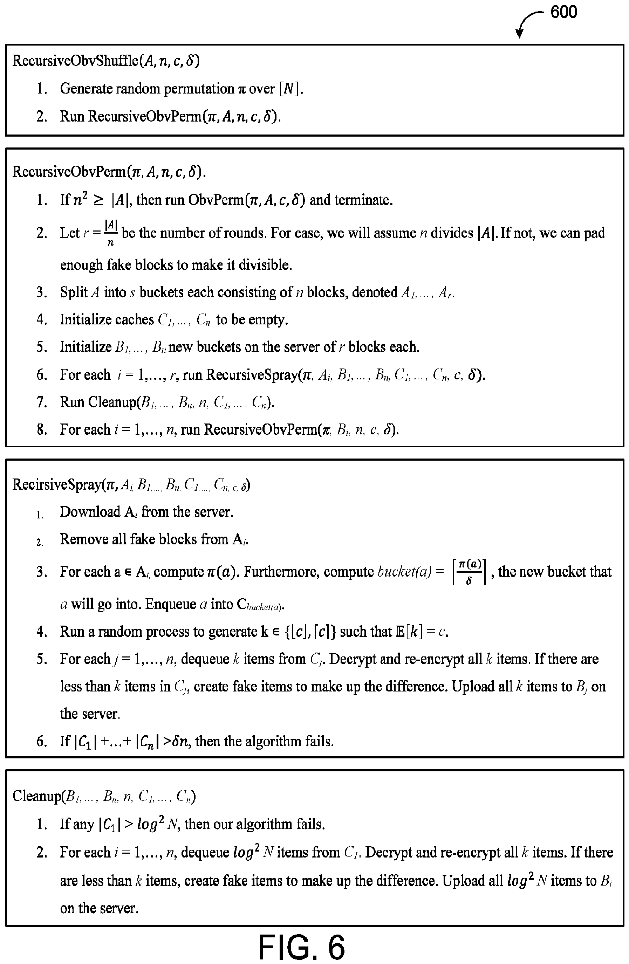

The oblivious permutation process 300 of FIGS. 3A-3J requires the client memory hardware 122 to have O(n) blocks of storage. FIG. 5 provides an example algorithm 500 useful for understanding the invention for applying obliviously shuffling when the client memory hardware 122 as the capacity of O(n) blocks of storage. In some implementations, the permutation process 300 executes in recursive manner to thereby eliminate the requirement of the client memory hardware 122 to have O(n) blocks of storage. As used herein the "O" is a notation for asymptotic complexity. Here, the capacity/size of the data buckets 350 may be increased to decrease the total number of data buckets 350 at the storage abstraction 150 and decrease the storage capacity required at the client memory hardware 122. For instance, assuming that the client memory hardware 122 has a capacity of $n = logN \cdot \omega(1)$ and given an input of $|A|$ items to recursively and obliviously shuffle (RecursiveObvShuffle), the routine 300 may split A into $r = \frac{|A|}{n}$ buckets each containing n data blocks 102 and split the buffer buckets 360 into n buffer buckets each of r items. Thereafter, the client device 120 may iteratively spray data block. However, in this example useful for understanding the invention, the recalibration process 400 may not execute since r is greater than n (r > n) and therefore the client device 120 is unable to download all items from a single buffer bucket 360. Instead, knowing that all of the items are sprayed into the appropriate buffer bucket 360, the client device may execute the RecursiveObvShuffle on the smaller instance of size equal to r. The client may repeat as a many times until the instance is small enough for download. FIG. 6 provides an example algorithm 600 for applying obliviously shuffling when the client memory hardware 122 as the capacity of $n = logN \cdot \omega(1)$. Additionally, using smaller values of the threshold value k (but still greater than zero) increases the client storage capacity such that less data blocks 102 are sprayed into their corresponding buffer buckets 360 during each spray iteration and the cache slots 370 grow larger.

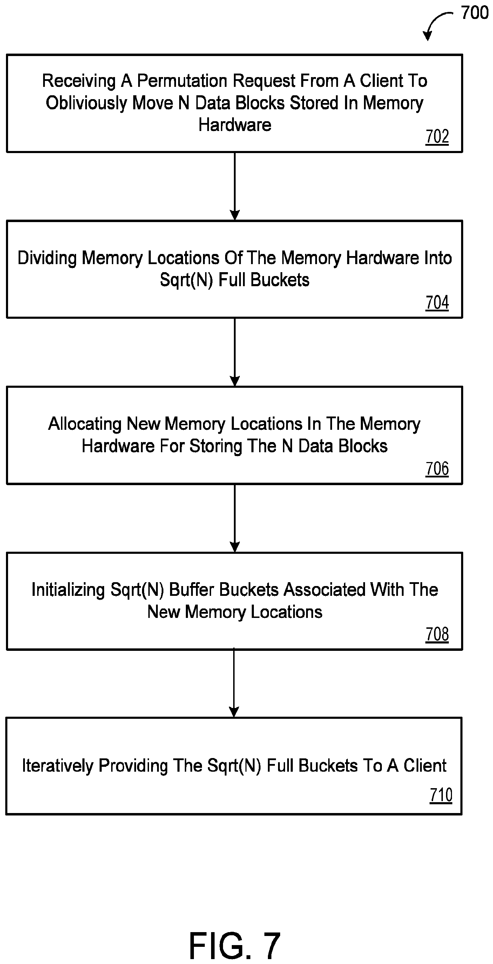

FIG. 7 illustrates a method 700 for obliviously moving data blocks 102 to new memory locations 118 on memory hardware 114. At block 702, the method 700 includes receiving, at data processing hardware 112, a permutation request from a client (i.e., client device 120) to obliviously move N data blocks 102 stored in memory hardware 114 in communication with the data processing hardware 112. Each N data block 102 is associated with the client 104 and stored at a corresponding memory location 118, 118A-N of the memory hardware 114.

At block 704, the method 700 includes organizing, by the data processing hardware 112, the memory locations 118 of the memory hardware 114 into n data buckets 350, 350a-n. Here, $n = \sqrt{N}$ and each data bucket 350 contains n data blocks 102. At block 706, the method 700 includes allocating, by the data processing hardware 112, new memory locations 118 in the memory hardware 114 for storing the N data blocks 102. At block 708, the method includes initializing, by the data processing hardware 112, buffer buckets 360, 360a-n associated with the new memory locations 118. Each buffer bucket 360 is associated with a corresponding cache slot 370, 370a-n initialized at the client device 120.

At block 710, the method includes iteratively providing the n data buckets from the data processing hardware 112 to the client device 120. For instance, the client device 120 may send a bucket download request 304 for each data bucket 350. In response to receiving each data bucket 350, the client device 120 is configured to (1) apply a random permutation on the n data blocks 102 within the corresponding data bucket 350 to determine the corresponding new memory location 118 and the corresponding buffer bucket 360 associated with each permutated data block 102; provide each permutated; provide each permutated data block 102 into the corresponding cache slot 370; spray up to a threshold value k of the permutated data blocks 102 from each cache slot 370 into the corresponding buffer buckets 360; and store any remaining permutated data blocks 102 in the corresponding cache slots 370.

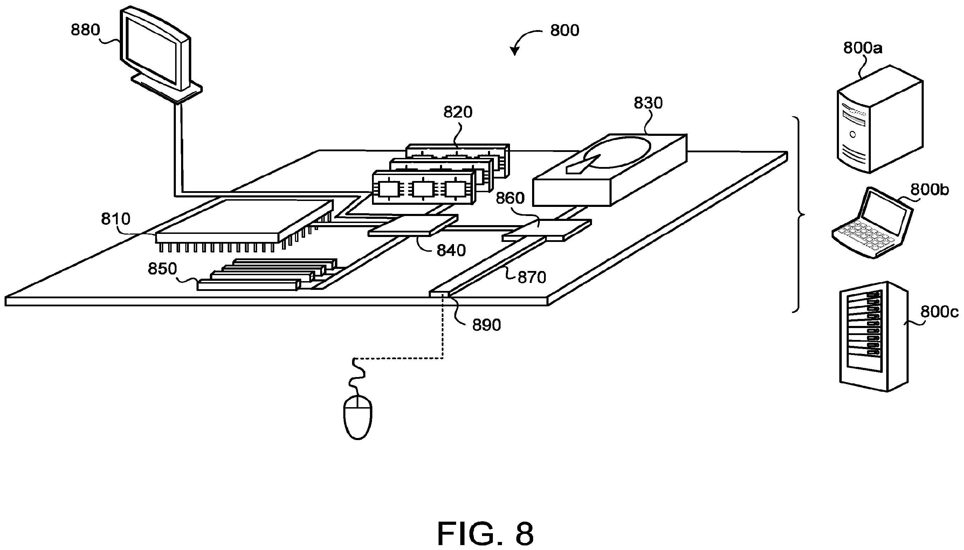

FIG. 8 is schematic view of an example computing device 800 that may be used to implement the systems and methods described in this document. The computing device 800 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 800 includes a processor 810 (e.g., data processing hardware 112), memory 820, a storage device 830, a high-speed interface/controller 840 connecting to the memory 820 and high-speed expansion ports 850, and a low speed interface/controller 860 connecting to low speed bus 870 and storage device 830. The computing device 800 may reside at the client device 120 and/or the distributed system 140. Each of the components 810, 820, 830, 840, 850, and 860, are interconnected using various busses, and may be mounted on a common motherboard or in other manners as appropriate. The processor 810 can process instructions for execution within the computing device 800, including instructions stored in the memory 820 or on the storage device 830 to display graphical information for a graphical user interface (GUI) on an external input/output device, such as display 880 coupled to high speed interface 840. In other implementations, multiple processors and/or multiple buses may be used, as appropriate, along with multiple memories and types of memory. Also, multiple computing devices 800 may be connected, with each device providing portions of the necessary operations (e.g., as a server bank, a group of blade servers, or a multi-processor system).

The memory 820 (e.g., memory hardware) stores information non-transitorily within the computing device 800. The memory 820 may be a computer-readable medium, a volatile memory unit(s), or non-volatile memory unit(s). The non-transitory memory 820 may be physical devices used to store programs (e.g., sequences of instructions) or data (e.g., program state information) on a temporary or permanent basis for use by the computing device 800. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 830 is capable of providing mass storage for the computing device 800. In some implementations, the storage device 830 is a computer-readable medium. In various different implementations, the storage device 830 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 820, the storage device 830, or memory on processor 810.

The high speed controller 840 manages bandwidth-intensive operations for the computing device 800, while the low speed controller 860 manages lower bandwidth-intensive operations. Such allocation of duties is exemplary only. In some implementations, the high-speed controller 840 is coupled to the memory 820, the display 880 (e.g., through a graphics processor or accelerator), and to the high-speed expansion ports 850, which may accept various expansion cards (not shown). In some implementations, the low-speed controller 860 is coupled to the storage device 830 and low-speed expansion port 870. The low-speed expansion port 870, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 800 may be implemented in a number of different forms, as shown in the figure. For example, it may be implemented as a standard server 800a or multiple times in a group of such servers 800a, as a laptop computer 800b, or as part of a rack server system 800c.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as an application, program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

One or more aspects of the disclosure can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specifics, these should not be construed as limitations on the scope of the disclosure or of what may be claimed, but rather as descriptions of features specific to particular implementations of the disclosure. Certain features that are described in this specification in the context of separate implementations can also be implemented in combination in a single implementation. Conversely, various features that are described in the context of a single implementation can also be implemented in multiple implementations separately or in any suitable sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multi-tasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

A number of implementations have been described. Nevertheless, it will be understood that various modifications may be made without departing from the scope of the disclosure. Accordingly, other implementations are within the scope of the following claims.

**Claims**

1.  A method (700) for obliviously moving N data blocks (102) stored in memory hardware (114) in communication with data processing hardware (112), each N data block (102) associated with a client (104) and stored at a corresponding memory location (118) of the memory hardware (114), the method (700) comprising:

    organizing, by the data processing hardware (112), the memory locations (118) of the memory hardware (114) into substantially $\sqrt{N}$ data buckets (350), each data bucket (350) containing substantially $\sqrt{N}$ data blocks (102);
    allocating, by the data processing hardware (112), substantially $\sqrt{N}$ buffer buckets (360) associated with new memory locations (118) in the memory hardware (114), each buffer bucket (360) associated with a corresponding cache slot (370) allocated at a client device (120) for storing cached permuted data blocks (102), wherein substantially √N corresponds to a value between $N^{0,1}$ and $N^{0,75}$; and

iteratively providing the substantially $\sqrt{N}$ data buckets (350) from the data processing hardware (112) to the client device (120), the client device (120), in response to receiving each data bucket (350), configured to:

> apply a random permutation on the substantially $\sqrt{N}$ data blocks (102) within the corresponding data bucket (350) to generate permuted data blocks (102);
> determine a corresponding buffer bucket (360) and a corresponding cache slot (370) for each permuted data block (102);
> provide each of the permuted data blocks (102) into the corresponding cache slot (370) associated with the corresponding buffer bucket (360);
> for each buffer bucket (360), determine a quantity of data blocks (102) to be evicted from the corresponding cache slot into the buffer bucket (360) and a strategy for selecting data blocks (102) to be evicted from the corresponding cache slot into the buffer bucket (360) from at least one of: cached permuted data blocks (102) from the corresponding cache slot (370); or dummy data blocks (103);
> evict the selected data blocks (102) into the buffer buckets (360) according to the strategy;
> store any unselected permuted data blocks (102) in their corresponding cache slots (370); and
> remove any selected cached permuted data blocks (102) from their corresponding cache slots (370);

the method further comprising, after the client device (120) evicts all of the permuted data blocks (102) from all of the cache slots (370) into the corresponding buffer buckets (360), iteratively providing the substantially $\sqrt{N}$ buffer buckets (360) from the data processing hardware (112) to the client device (120), the client device (120), in response to receiving each buffer bucket (360), configured to:

> remove any dummy blocks (103) from the corresponding buffer bucket (360);

> decrypt the data blocks (102) within the corresponding buffer bucket (360);
> re-encrypt each of the data blocks (102);
> order the re-encrypted data blocks (102) within the corresponding buffer bucket (360); and
> upload the buffer bucket (360) to the data processing hardware (112).

2. The method (700) of claim 1, wherein the client device (120) applies the random permutation on the substantially $\sqrt{N}$ data blocks (102) within the corresponding data bucket (350) by:

> decrypting each of the substantially $\sqrt{N}$ data blocks (102) received within the corresponding data bucket (350);
> re-encrypting each of the substantially $\sqrt{N}$ data blocks (102); and
> applying the random permutation to the re-encrypted substantially $\sqrt{N}$ data blocks (102).

3. The method (700) of claim 2, wherein the random permutation comprises shuffling the re-encrypted substantially $\sqrt{N}$ data blocks (102) at the client device (120) using a cryptographically secure random key hidden from the data processing hardware (112).

4. The method (700) of any of claims 1-3, wherein the quantity of data blocks (102) to be evicted into a buffer bucket (360) is determined independently from the number of permuted data blocks (102) corresponding to the buffer bucket (360).

5. The method (700) of any of claims 1-4, wherein the quantity of data blocks (102) to be evicted into one buffer bucket (360) is different than the quantity of data blocks (102) to be evicted into another bucket during the same iteration.

6. The method (700) of any of claims 1-5, wherein the quantity of data blocks (102) to be evicted into one buffer bucket (360) is different than the quantity of data blocks (102) to be evicted into another bucket between separate iterations.

7. The method (700) of any of claims 1-6, further comprising after the client device (120) evicts all of the permuted data blocks (102) from all of the cache slots (370) into the corresponding buffer buckets (360), de-allocating, by the data processing hardware (112), all of the data buckets (350) from the memory hardware (114).

8. A system (100) for obliviously moving N data blocks (102) in a distributed system (140), each N data block (102) associated with a client (104) and stored at a corresponding memory location (118) of the distributed system (140), the system (100) comprising:

a client device (120) associated with the client (104);

data processing hardware (112) of the distributed system (140) in communication with the client device (120); and

memory hardware (114) in communication with the data processing hardware (112), the memory hardware (114) storing instructions that when executed on the data processing hardware (112) cause the data processing hardware (112) to perform operations comprising:

organizing the memory locations (118) of the memory hardware (114) into substantially $\sqrt{N}$ data buckets (350), each data bucket (350) containing substantially $\sqrt{N}$ data blocks (102);

allocating substantially $\sqrt{N}$ buffer buckets (360) associated with new memory locations (118) in the memory hardware (114), each buffer bucket (360) associated with a corresponding cache slot (370) allocated at the client device (120) for storing cached permutated data blocks (102), wherein substantially $\sqrt{N}$ corresponds to a value between $N^{0,1}$ and $N^{0,75}$; and

iteratively providing the substantially $\sqrt{N}$ data buckets (350) from the data processing hardware (112) to the client device (120); wherein the client device (120), in response to receiving each data bucket (350), is configured to:

apply a random permutation on the substantially $\sqrt{N}$ data blocks (102) within the corresponding data bucket (350) to generate permutated data blocks (102);

determine a corresponding buffer bucket (360) and a corresponding cache slot (370) for each permutated data block (102);

provide each of the permutated data blocks (102) into the corresponding cache slot (370) associated with the corresponding buffer bucket (360);

for each buffer bucket (360), determine a quantity of data blocks (102) to be evicted from the corresponding cache slot into the buffer bucket (360) and a strategy for selecting data blocks (102) to be evicted from the corresponding cache slot into the buffer bucket (360) from at least one of: cached permutated data blocks (102) from the corresponding cache slot (370); or dummy data blocks (103);

evict the selected data blocks (102) into the buffer buckets (360) according to the strategy;

store any unselected permutated data blocks (102) in their corresponding cache slots (370); and

remove any selected cached permutated data blocks (102) from their corresponding cache slots (370);

wherein the operations further comprise, after the client device (120) evicts all of the permutated data blocks (102) from all of the cache slots (370) into the corresponding buffer buckets (360), iteratively providing the substantially $\sqrt{N}$ buffer buckets (360) to the client device (120), the client device (120) in response to receiving each buffer bucket (360), configured to:

remove any dummy blocks (103) from the corresponding buffer bucket (360);

decrypt the data blocks (102) within the corresponding buffer bucket (360);

re-encrypt each of the data blocks (102);

order the data blocks (102) within the corresponding buffer bucket (360); and

upload the buffer bucket (360) to the data processing hardware (112).

9. The system (100) of claim 8, wherein the client device (120) applies the random permutation on the substantially $\sqrt{N}$ data blocks (102) within the corresponding data bucket (350) by:

decrypting each of the substantially $\sqrt{N}$ data blocks (102) received within the corresponding data bucket (350);

re-encrypting each of the substantially $\sqrt{N}$ data blocks (102); and

applying the random permutation to the re-encrypted substantially $\sqrt{N}$ data blocks (102).

10. The system (100) of claim 9, wherein the random permutation comprises shuffling the re-encrypted substantially $\sqrt{N}$ data blocks (102) at the client device (120) using a cryptographically secure random key hidden from the data processing hardware (112).

11. The system (100) of any of claims 8-10, wherein the quantity of data blocks (102) to be evicted into a buffer bucket (360) is determined independently from the number of permuted data blocks (102) corresponding to the buffer bucket (360).

12. The system (100) of any of claims 8-11, wherein the quantity of data blocks (102) to be evicted into one buffer bucket (360) is different than the quantity of data blocks (102) to be evicted into another bucket during the same iteration.

13. The system (100) of any of claims 8-12, wherein the quantity of data blocks (102) to be evicted into one buffer bucket (360) is different than the quantity of data blocks (102) to be evicted into another bucket between separate iterations.

14. The system (100) of any of claims 8-13, wherein the operations further comprise, after the client device (120) evicts all of the permutated data blocks (102) from all of the cache slots (370) into the corresponding buffer buckets (360), de-allocating all of the data buckets (350) from the memory hardware (114).

**Patentansprüche**

1. Verfahren (700) zum unbemerkten Verschieben von N Datenblöcken (102), die in Speicherhardware (114) in Kommunikation mit Datenverarbeitungshardware (112) gespeichert sind, wobei jeder N Datenblock (102) einem Client (104) zugeordnet ist und an einem entsprechenden Speicherplatz (118) der Speicherhardware (114) gespeichert ist, wobei das Verfahren (700) umfasst:

Organisieren, durch die Datenverarbeitungshardware (112), der Speicherplätze (118) der Speicherhardware (114) in im Wesentlichen $\sqrt{N}$ Datentöpfe (350), wobei jeder Datentopf (350) im Wesentlichen $\sqrt{N}$ Datenblöcke (102) enthält;
Zuweisen, durch die Datenverarbeitungshardware (112), von im Wesentlichen $\sqrt{N}$ Puffertöpfen (360), die neuen Speicherplätzen (118) in der Speicherhardware (114) zugeordnet sind, wobei jeder Puffertopf (360) einem entsprechenden Cache-Steckplatz (370) zugeordnet ist, der an einer Client-Vorrichtung (120) zum Speichern zwischengespeicherter permutierter Datenblöcke (102) zugewiesen ist, wobei im Wesentlichen $\sqrt{N}$ einem Wert zwischen $N^{0,1}$ und

$N^{0,75}$ entspricht; und
iteratives Bereitstellen der im Wesentlichen $\sqrt{N}$ Datentöpfe (350) von der Datenverarbeitungshardware (112) an die Client-Vorrichtung (120), wobei die Client-Vorrichtung (120), als Reaktion auf ein Empfangen jedes Datentopfes (350), konfiguriert ist zum:

Anwenden einer Zufallspermutation auf die im Wesentlichen $\sqrt{N}$ Datenblöcke (102) innerhalb des entsprechenden Datentopfes (350), um permutierte Datenblöcke (102) zu erzeugen;
Bestimmen eines entsprechenden Puffertopfes (360) und eines entsprechenden Cache-Steckplatzes (370) für jeden permutierten Datenblock (102);
Bereitstellen jedes der permutierten Datenblöcke (102) in den entsprechenden Cache-Steckplatz (370), der dem entsprechenden Puffertopf (360) zugeordnet ist;
für jeden Puffertopf (360), Bestimmen einer Menge von Datenblöcken (102), die aus dem entsprechenden Cache-Steckplatz in den Puffertopf (360) ausgelagert werden soll, und einer Strategie zum Auswählen von Datenblöcken (102), die aus dem entsprechenden Cache-Steckplatz in den Puffertopf (360) ausgelagert werden sollen, aus mindestens einem von: zwischengespeicherten permutierten Datenblöcken (102) aus dem entsprechenden Cache-Steckplatz (370); oder Dummy-Datenblöcken (103);
Auslagern der ausgewählten Datenblöcke (102) in die Puffertöpfe (360) gemäß der Strategie;
Speichern aller nicht ausgewählten permutierten Datenblöcke (102) in ihren entsprechenden Cache-Steckplätzen (370); und
Entfernen aller ausgewählten zwischengespeicherten permutierten Datenblöcke (102) aus ihren entsprechenden Cache-Steckplätzen (370);
wobei das Verfahren ferner, nachdem die Client-Vorrichtung (120) sämtliche der permutierten Datenblöcke (102) aus sämtlichen der Cache-Steckplätze (370) in die entsprechenden Puffertöpfe (360) ausgelagert hat, iteratives Bereitstellen der im Wesentlichen $\sqrt{N}$ Puffertöpfe (360) von der Datenverarbeitungshardware (112) an die Client-Vorrichtung (120) umfasst, wobei die Client-Vorrichtung (120), als Reaktion auf ein Empfangen jedes Puffertopfes (360),

konfiguriert ist zum:

Entfernen aller Dummy-Blöcke (103) aus dem entsprechenden Puffertopf (360); Entschlüsseln der Datenblöcke (102) innerhalb des entsprechenden Puffertopfes (360); erneutes Verschlüsseln jedes der Datenblöcke (102); Ordnen der erneut verschlüsselten Datenblöcke (102) innerhalb des entsprechenden Puffertopfes (360); und Hochladen des Puffertopfes (360) auf die Datenverarbeitungshardware (112).

2. Verfahren (700) nach Anspruch 1, wobei die Client-Vorrichtung (120) die Zufallspermutation auf die im Wesentlichen $\sqrt{N}$ Datenblöcke (102) innerhalb des entsprechenden Datentopfes (350) anwendet durch:

Entschlüsseln jedes der im Wesentlichen $\sqrt{N}$ Datenblöcke (102), die innerhalb des entsprechenden Datentopfes (350) empfangen werden; erneutes Verschlüsseln jedes der im Wesentlichen $\sqrt{N}$ Datenblöcke (102); und Anwenden der Zufallspermutation auf die erneut verschlüsselten im Wesentlichen $\sqrt{N}$ Datenblöcke (102).

3. Verfahren (700) nach Anspruch 2, wobei die Zufallspermutation Mischen der erneut verschlüsselten im Wesentlichen $\sqrt{N}$ Datenblöcke (102) an der Client-Vorrichtung (120) unter Verwendung eines kryptografisch sicheren Zufallsschlüssels umfasst, der vor der Datenverarbeitungshardware (112) verborgen ist.

4. Verfahren (700) nach einem der Ansprüche 1-3, wobei die Menge von Datenblöcken (102), die in einen Puffertopf (360) ausgelagert werden soll, unabhängig von der Anzahl an permutierten Datenblöcken (102) bestimmt wird, die dem Puffertopf (360) entsprechen.

5. Verfahren (700) nach einem der Ansprüche 1-4, wobei sich die Menge von Datenblöcken (102), die in einen Puffertopf (360) ausgelagert werden soll, von der Menge von Datenblöcken (102) unterscheidet, die während derselben Iteration in einen anderen Topf ausgelagert werden soll.

6. Verfahren (700) nach einem der Ansprüche 1-5, wobei sich die Menge von Datenblöcken (102), die in einen Puffertopf (360) ausgelagert werden soll, von der Menge von Datenblöcken (102) unterscheidet, die in einen anderen Topf zwischen getrennten Iterationen ausgelagert werden soll.

7. Verfahren (700) nach einem der Ansprüche 1-6, ferner umfassend, nachdem die Client-Vorrichtung (120) sämtliche der permutierten Datenblöcke (102) aus sämtlichen der Cache-Steckplätze (370) in die entsprechenden Puffertöpfe (360) ausgelagert hat, Freigeben, durch die Datenverarbeitungshardware (112), sämtlicher der Datentöpfe (350) von der Speicherhardware (114).

8. System (100) zum unbemerkten Verschieben von N Datenblöcken (102) in einem verteilten System (140), wobei jeder N Datenblock (102) einem Client (104) zugeordnet und an einem entsprechenden Speicherplatz (118) des verteilten Systems (140) gespeichert ist, wobei das System (100) umfasst:

eine Client-Vorrichtung (120), die dem Client (104) zugeordnet ist; Datenverarbeitungshardware (112) des verteilten Systems (140) in Kommunikation mit der Client-Vorrichtung (120); und Speicherhardware (114) in Kommunikation mit der Datenverarbeitungshardware (112), wobei die Speicherhardware (114) Anweisungen speichert, die bei Ausführung auf der Datenverarbeitungshardware (112) die Datenverarbeitungshardware (112) dazu veranlassen, Operationen durchzuführen, umfassend:

Organisieren der Speicherplätze (118) der Speicherhardware (114) in im Wesentlichen $\sqrt{N}$ Datentöpfe (350), wobei jeder Datentopf (350) im Wesentlichen $\sqrt{N}$ Datenblöcke (102) enthält;

Zuweisen von im Wesentlichen $\sqrt{N}$ Puffertöpfen (360), die neuen Speicherplätzen (118) in der Speicherhardware (114) zugeordnet sind, wobei jeder Puffertopf (360) einem entsprechenden Cache-Steckplatz (370) zugewiesen ist, der an der Client-Vorrichtung (120) zum Speichern zwischengespeicherter permutierter Datenblöcke (102) zugewiesen ist, wobei im Wesentlichen $\sqrt{N}$ einem Wert zwischen $N^{0,1}$ und $N^{0,75}$ entspricht; und iteratives Bereitstellen der im Wesentlichen $\sqrt{N}$ Datentöpfe (350) von der Datenverarbeitungshardware (112) an die Client-Vorrichtung (120); wobei die Client-Vorrichtung (120), als Reaktion auf ein Empfangen jedes Datentopfes (350), konfiguriert ist zum:

Anwenden einer Zufallspermutation auf die im Wesentlichen $\sqrt{N}$ Datenblöcke (102) innerhalb des entsprechenden Datentopfes (350), um permutierte Datenblöcke (102) zu erzeugen;
Bestimmen eines entsprechenden Puffertopfes (360) und eines entsprechenden Cache-Steckplatzes (370) für jeden permutierten Datenblock (102);
Bereitstellen jedes der permutierten Datenblöcke (102) in den entsprechenden Cache-Steckplatz (370), der dem entsprechenden Puffertopf (360) zugeordnet ist;
für jeden Puffertopf (360), Bestimmen einer Menge von Datenblöcken (102), die aus dem entsprechenden Cache-Steckplatz in den Puffertopf (360) ausgelagert werden soll, und einer Strategie zum Auswählen von Datenblöcken (102), die aus dem entsprechenden Cache-Steckplatz in den Puffertopf (360) ausgelagert werden sollen, aus mindestens einem von: zwischengespeicherten permutierten Datenblöcken (102) aus dem entsprechenden Cache-Steckplatz (370); oder Dummy-Datenblöcken (103);
Auslagern der ausgewählten Datenblöcke (102) in die Puffertöpfe (360) gemäß der Strategie;
Speichern aller nicht ausgewählten permutierten Datenblöcke (102) in ihren entsprechenden Cache-Steckplätzen (370); und
Entfernen aller ausgewählten zwischengespeicherten permutierten Datenblöcke (102) aus ihren entsprechenden Cache-Steckplätzen (370);
wobei die Operationen ferner, nachdem die Client-Vorrichtung (120) sämtliche der permutierten Datenblöcke (102) aus sämtlichen der Cache-Steckplätze (370) in die entsprechenden Puffertöpfe (360) ausgelagert hat, iteratives Bereitstellen der im Wesentlichen $\sqrt{N}$ Puffertöpfe (360) an die Client-Vorrichtung (120) umfassen, wobei die Client-Vorrichtung (120) als Reaktion auf ein Empfangen jedes Puffertopfes (360) konfiguriert ist zum:

Entfernen aller Dummy-Blöcke (103) aus dem entsprechenden Puffertopf (360);
Entschlüsseln der Datenblöcke (102) innerhalb des entsprechenden Puffertopfes (360);
erneutes Verschlüsseln jedes der Datenblöcke (102);
Ordnen der Datenblöcke (102) innerhalb des entsprechenden Puffertopfes (360); und
Hochladen des Puffertopfes (360) auf die Datenverarbeitungshardware (112).

9. System (100) nach Anspruch 8, wobei die Client-Vorrichtung (120) die Zufallspermutation auf die im Wesentlichen $\sqrt{N}$ Datenblöcke (102) innerhalb des entsprechenden Datentopfes (350) anwendet durch:

Entschlüsseln jedes der im Wesentlichen $\sqrt{N}$ Datenblöcke (102), die innerhalb des entsprechenden Datentopfes (350) empfangen werden;
erneutes Verschlüsseln jedes der im Wesentlichen $\sqrt{N}$ Datenblöcke (102); und
Anwenden der Zufallspermutation auf die erneut verschlüsselten im Wesentlichen $\sqrt{N}$ Datenblöcke (102).

10. System (100) nach Anspruch 9, wobei die Zufallspermutation Mischen der erneut verschlüsselten im Wesentlichen $\sqrt{N}$ Datenblöcke (102) an der Client-Vorrichtung (120) unter Verwendung eines kryptografisch sicheren Zufallsschlüssels umfasst, der vor der Datenverarbeitungshardware (112) verborgen ist.

11. System (100) nach einem der Ansprüche 8-10, wobei die Menge von Datenblöcken (102), die in einen Puffertopf (360) ausgelagert werden soll, unabhängig von der Anzahl an permutierten Datenblöcken (102) bestimmt wird, die dem Puffertopf (360) entsprechen.

12. System (100) nach einem der Ansprüche 8-11, wobei sich die Menge von Datenblöcken (102), die in einen Puffertopf (360) ausgelagert werden soll, von der Menge von Datenblöcken (102) unterscheidet, die während derselben Iteration in einen anderen Topf ausgelagert werden soll.

13. System (100) nach einem der Ansprüche 8-12, wobei sich die Menge von Datenblöcken (102), die in einen Puffertopf (360) ausgelagert werden soll, von der Menge von Datenblöcken (102) unterscheidet, die in einen anderen Topf zwischen getrennten Iterationen ausgelagert werden soll.

14. System (100) nach einem der Ansprüche 8-13, wobei die Operationen ferner, nachdem die Client-Vorrichtung (120) sämtliche der permutierten Datenblöcke (102) aus sämtlichen der Cache-Steckplätze (370) in die entsprechenden Puffertöpfe (360) ausgelagert hat, Freigeben sämtlicher der Datentöpfe (350) von der Speicherhardware (114) umfassen.

**Revendications**

1. Procédé (700) pour déplacer de manière évidente N blocs de données (102) stockés dans un matériel de mémoire (114) en communication avec un matériel de traitement de données (112), chaque N bloc de données (102) étant associé à un client (104) et stocké à un emplacement de mémoire correspondant (118) du matériel de mémoire (114), le procédé (700) comprenant :

l'organisation, par le matériel de traitement de données (112), des emplacements de mémoire (118) du matériel de mémoire (114) en essentiellement $\sqrt{N}$ compartiments de données (350), chaque compartiment de données (350) contenant essentiellement $\sqrt{N}$ blocs de données (102) ;
l'allocation, par le matériel de traitement de données (112), d'essentiellement $\sqrt{N}$ compartiments tampons (360) associés à de nouveaux emplacements de mémoire (118) dans le matériel de mémoire (114), chaque compartiment tampon (360) associé à un emplacement de cache correspondant (370) alloué à un dispositif client (120) pour stocker des blocs de données permutées mis en cache (102), dans lequel essentiellement $\sqrt{N}$ correspond à une valeur entre $N^{0,1}$ et $N^{0,75}$ ; et
la fourniture de manière itérative des essentiellement $\sqrt{N}$ compartiments de données (350) en provenance du matériel de traitement de données (112) au dispositif client (120), le dispositif client (120), en réponse à la réception de chaque compartiment de données (350), configuré pour :

appliquer une permutation aléatoire sur les essentiellement $\sqrt{N}$ blocs de données (102) dans le compartiment de données correspondant (350) pour générer des blocs de données permutés (102) ;

déterminer un compartiment tampon correspondant (360) et un emplacement de cache correspondant (370) pour chaque bloc de données permuté (102) ;
fournir chacun des blocs de données permutés (102) dans l'emplacement de cache correspondant (370) associé au compartiment tampon correspondant (360) ;
pour chaque compartiment tampon (360), déterminer une quantité de blocs de données (102) à expulser de l'emplacement de cache correspondant dans le compartiment tampon (360) et une stratégie de sélection des blocs de données (102) à expulser de l'emplacement de cache correspondant dans le compartiment tampon (360) à partir d'au moins l'un parmi : des blocs de données permutées mis en cache (102) à partir de l'emplacement de cache correspondant (370) ; ou des blocs de données factices (103) ;
expulser les blocs de données sélectionnés (102) dans les compartiments tampons (360) selon la stratégie ;
stocker tous les blocs de données permutés non sélectionnés (102) dans leurs emplacements de cache correspondants (370) ; et
supprimer tous les blocs de données permutés mis en cache sélectionnés (102) de leurs emplacements de cache correspondants (370) ;
le procédé comprenant en outre, après que le dispositif client (120) a expulsé tous les blocs de données permutés (102) de tous les emplacements de cache (370) dans les compartiments tampons correspondants (360),
la fourniture itérative des essentiellement $\sqrt{N}$ compartiments tampons (360) en provenance du matériel de traitement de données (112) au dispositif client (120), le dispositif client (120), en réponse à la réception de chaque compartiment tampon (360), configuré pour :

retirer tous les blocs factices (103) du compartiment tampon correspondant (360);
décrypter les blocs de données (102) dans le compartiment tampon correspondant (360) ;
ré-encrypter chacun des blocs de données (102) ;
ordonner les blocs de données ré-encryptés (102) dans le compartiment tampon correspondant (360) ;

et

télécharger le compartiment tampon (360) vers le matériel de traitement de données (112).

2. Procédé (700) selon la revendication 1, dans lequel le dispositif client (120) applique la permutation aléatoire sur les essentiellement $\sqrt{N}$ blocs de données (102) dans le compartiment de données correspondant (350) par :

décryptage de chacun des essentiellement $\sqrt{N}$ blocs de données (102) reçus dans le compartiment de données correspondant (350) ; ré-encryptage de chacun des essentiellement $\sqrt{N}$ blocs de données (102) ; et application de la permutation aléatoire aux essentiellement $\sqrt{N}$ blocs de données ré-encryptés (102).

3. Procédé (700) selon la revendication 2, dans lequel la permutation aléatoire comprend le brassage des essentiellement $\sqrt{N}$ blocs de données ré-encryptés (102) au niveau du dispositif client (120) en utilisant une clé aléatoire cryptographiquement sécurisée cachée du matériel de traitement de données (112).

4. Procédé (700) selon l'une quelconque des revendications 1 à 3, dans lequel la quantité de blocs de données (102) à expulser dans un compartiment tampon (360) est déterminée indépendamment du nombre de blocs de données permutés (102) correspondant au compartiment tampon (360).

5. Procédé (700) selon l'une quelconque des revendications 1 à 4, dans lequel la quantité de blocs de données (102) à expulser dans un compartiment tampon (360) est différente de la quantité de blocs de données (102) à expulser dans un autre compartiment pendant la même itération.

6. Procédé (700) selon l'une quelconque des revendications 1 à 5, dans lequel la quantité de blocs de données (102) à expulser dans un compartiment tampon (360) est différente de la quantité de blocs de données (102) à expulser dans un autre compartiment entre des itérations séparées.

7. Procédé (700) selon l'une quelconque des revendications 1 à 6, comprenant en outre après que le dispositif client (120) a expulsé tous les blocs de données permutés (102) de tous les emplacements de cache (370) dans les compartiments tampons correspondants (360), la désaffection, par le matériel de traitement de données (112), de tous les compartiments de données (350) du matériel de mémoire (114).

8. Système (100) pour déplacer de manière évidente N blocs de données (102) dans un système distribué (140), chaque N bloc de données (102) étant associé à un client (104) et stocké à un emplacement de mémoire correspondant (118) du système distribué (140), le système (100) comprenant :

un dispositif client (120) associé au client (104) ; un matériel de traitement de données (112) du système distribué (140) en communication avec le dispositif client (120) ; et un matériel de mémoire (114) en communication avec le matériel de traitement de données (112), le matériel de mémoire (114) stockant des instructions qui, lorsqu'elles sont exécutées sur le matériel de traitement de données (112), amènent le matériel de traitement de données (112) à exécuter des opérations comprenant :

l'organisation des emplacements de mémoire (118) du matériel de mémoire (114) en essentiellement $\sqrt{N}$ compartiments de données (350), chaque compartiment de données (350) contenant essentiellement $\sqrt{N}$ blocs de données (102) ; l'allocation d'essentiellement $\sqrt{N}$ compartiments tampons (360) associés à de nouveaux emplacements de mémoire (118) dans le matériel de mémoire (114), chaque compartiment tampon (360) étant associé à un emplacement de cache correspondant (370) alloué au niveau du dispositif client (120) pour stocker des blocs de données permutées mis en cache (102), dans lequel essentiellement $\sqrt{N}$ correspond à une valeur comprise entre $N^{0,1}$ et $N^{0,75}$ ; et la fourniture de manière itérative des essentiellement $\sqrt{N}$ compartiments de données (350) en provenance du matériel de traitement de données (112) au dispositif client (120) ; dans lequel le dispositif client (120), en réponse à la réception de chaque compartiment de données (350), est configuré pour :

appliquer une permutation aléatoire sur les essentiellement $\sqrt{N}$ blocs de données (102) dans le compartiment de données correspondant (350) pour générer des blocs de données permutés (102) ;

déterminer un compartiment tampon correspondant (360) et un emplacement de cache correspondant (370) pour chaque bloc de données permuté (102) ;

fournir chacun des blocs de données permutés (102) dans l'emplacement de cache correspondant (370) associé au compartiment tampon correspondant (360) ;

pour chaque compartiment tampon (360), déterminer une quantité de blocs de données (102) à expulser de l'emplacement de cache correspondant dans le compartiment tampon (360) et une stratégie de sélection des blocs de données (102) à expulser de l'emplacement de cache correspondant dans le compartiment tampon (360) à partir d'au moins l'un parmi : des blocs de données permutées mis en cache (102) de l'emplacement de cache correspondant (370) ; ou des blocs de données factices (103) ;

expulser les blocs de données sélectionnés (102) dans les compartiments tampons (360) selon la stratégie ;

stocker tous les blocs de données permutés non sélectionnés (102) dans leurs emplacements de cache correspondants (370) ; et

supprimer tous les blocs de données permutés mis en cache sélectionnés (102) de leurs emplacements de cache correspondants (370) ;

dans lequel les opérations comprennent en outre, après que le dispositif client (120) a expulsé tous les blocs de données permutés (102) de tous les emplacements de cache (370) dans les compartiments tampons correspondants (360), fournir de manière itérative les essentiellement $\sqrt{N}$ compartiments tampons (360) au dispositif client (120), le dispositif client (120) en réponse à la réception de chaque compartiment tampon (360), configuré pour :

retirer tous les blocs factices (103) du compartiment tampon correspondant (360) ;

décrypter les blocs de données (102) dans le compartiment tampon correspondant (360) ;

ré-encrypter chacun des blocs de données (102) ;

ordonner les blocs de données (102) dans le compartiment tampon correspondant (360) ; et

télécharger le compartiment tampon (360) vers le matériel de traitement de données (112).

9. Système (100) selon la revendication 8, dans lequel le dispositif client (120) applique la permutation aléatoire sur les essentiellement $\sqrt{N}$ blocs de données (102) dans le compartiment de données correspondant (350) par :

décryptage de chacun des essentiellement $\sqrt{N}$ blocs de données (102) reçus dans le compartiment de données correspondant (350) ;

ré-encryptage de chacun des essentiellement $\sqrt{N}$ blocs de données (102) ; et

application de la permutation aléatoire aux essentiellement $\sqrt{N}$ blocs de données ré-encryptés (102).

10. Système (100) selon la revendication 9, dans lequel la permutation aléatoire comprend le brassage des essentiellement $\sqrt{N}$ blocs de données ré-encryptés (102) au niveau du dispositif client (120) en utilisant une clé aléatoire cryptographiquement sécurisée cachée du matériel de traitement de données (112).

11. Système (100) selon l'une quelconque des revendications 8 à 10, dans lequel la quantité de blocs de données (102) à expulser dans un compartiment tampon (360) est déterminée indépendamment du nombre de blocs de données permutés (102) correspondant au compartiment tampon (360).

12. Système (100) selon l'une quelconque des revendications 8 à 11, dans lequel la quantité de blocs de données (102) à expulser dans un compartiment tampon (360) est différente de la quantité de blocs de données (102) à expulser dans un autre compartiment pendant la même itération.

13. Système (100) selon l'une quelconque des revendications 8 à 12, dans lequel la quantité de blocs de données (102) à expulser dans un compartiment tampon (360) est différente de la quantité de blocs de données (102) à expulser dans un autre compartiment entre des itérations séparées.

14. Système (100) selon l'une quelconque des revendications 8 à 13, dans lequel les opérations comprennent en outre, après que le dispositif client (120) a expulsé tous les blocs de données permutés (102) de tous les emplacements de cache (370) dans les compartiments tampons correspondants (360), la désallocation de tous les compartiments de données (350) du matériel de mémoire (114).

FIG. 1

**FIG. 2**

EP 3 616 068 B1

**FIG. 3A**

300

Buffer Bucket 4 — 350,360n

Buffer Bucket 3 — 360,360c

Buffer Bucket 2 — 360,360b

Buffer Bucket 1 — 360,360a

140

150 — O-RAM Storage Abstraction

Data Bucket 4
Block 13, Block 14, Block 15, Block 16 — 350n

Data Bucket 3
Block 9, Block 10, Block 11, Block 12 — 350c

Data Bucket 2
Block 5, Block 6, Block 7, Block 8 — 350b

Data Bucket 1 — 350a

$c_1$ — 370,370a
$c_2$ — 370,370b
$c_3$ — 370,370c
$c_4$ — 370,370n

1. Decrypt/Re-Encrypt Blocks 1-4
2. Apply Random Permutation on Blocks 1-4
3. Determine threshold value k
4. Provide Permutated Blocks 1-4 to Corresponding Cache Slot

120

122

Block 1, Block 2, Block 3, Block 4 — 350a

102

FIG. 3B

FIG. 3C

FIG. 3D

FIG. 3E

EP 3 616 068 B1

FIG. 3F

EP 3 616 068 B1

FIG. 3G

EP 3 616 068 B1

Block11
Block12
~370,370a

C₂ ~370,370b

C₃ ~370,370c

C₄ ~370,370n

120

122

1. Decrypt/Re-Encrypt Blocks 13-16

2. Apply Random Permutation on Blocks 13-16

3. Provide Permutated Blocks 13-16 to Corresponding Cache Slot

Block 13
Block 14
Block 15
Block 16

350c

**Buffer Bucket 1**

| Dummy |
| Block 6 |
| Block 8 |

360,360a

**Buffer Bucket 2**

| Block 1 |
| Block 3 |
| Block 4 |

360,360b

**Buffer Bucket 3**

| Dummy |
| Block 5 |
| Block 10 |

360,360c

**Buffer Bucket 4**

| Block 2 |
| Block 7 |
| Block 9 |

350,360n

140

O-RAM Storage Abstraction ~150

**Data Bucket 1**

Block 1
Block 2
Block 3
Block 4

350a

**Data Bucket 2**

Block 5
Block 6
Block 7
Block 8

350b

**Data Bucket 3**

Block 9
Block 10
Block 11
Block 12

350c

**Data Bucket 4**

300

FIG. 3H

EP 3 616 068 B1

FIG. 3I

EP 3 616 068 B1

FIG. 3J

EP 3 616 068 B1

FIG. 4A

FIG. 4B

500

ObvShuffle($A, c, \delta$)

1. Generate a random permutation $\pi$ over $[N]$.

2. Run ObvPerm($\pi, c, \delta$).

---

ObvPerm ($\pi, A, c, \delta$)

1. Divide the $N$ items in $A$ into $n$ buckets of size $n$ each. Bucket 1, A$_1$, will contain the items 1,...,
   $n$, bucket 2, A$_2$, will contain the items $n + 1$,..., $2n$, and so on.

2. Initialize caches $C_1, ..., C_n$ to be empty.

3. Initialize $B_1, ..., B_n$ new buckets on the server.

4. For each $i = 1,..., n$, run Spray($\pi$, A$_i$, $C_1, ..., C_n, c, \delta$).

5. For each $i = 1,..., n$, run Recalibrate($\pi$, B$_i$, $C_i$).

---

Spray($\pi, A_i, B_1, ..., B_n, C_1, ..., C_n, c, \delta$)

1. Download A$_i$ from the server.

2. For each a $\in$ A$_i$, compute $\pi(a)$. Furthermore, compute $bucket(a) = \left\lceil \frac{\pi(a)}{n} \right\rceil$, the new bucket that $a$
   will go into. Enqueue $a$ into C$_{bucket(a)}$.

3. Run a random process to generate k $\in \{\lfloor c \rfloor, \lceil c \rceil\}$ such that $\mathbb{E}[k] = c$.

4. For each $j = 1,..., n$, dequeue $k$ items from $C_j$. Decrypt and re-encrypt all $k$ items. If there are
   less than $k$ items, create fake items to make up the difference. Upload all $k$ items to $B_j$ on the
   server.

5. If $|C_1| + ... + |C_n| > \delta\sqrt{N}$, then the algorithm fails.

---

Recalibrate($\pi, B_i, C_i$)

1. Download $B_i$ from the server.

2. Remove all fake items from $B_i$. Combine all real entries of $B_i$ with $C_i$ and order them correctly
   according $\pi$.

3. Decrypt and re-encrypt all real items of $B_i$.

4. Upload the correctly ordered $B_i$ back to the server.

# FIG. 5

600

---

RecursiveObvShuffle($A, n, c, \delta$)

1. Generate random permutation $\pi$ over $[N]$.

2. Run RecursiveObvPerm($\pi, A, n, c, \delta$).

---

RecursiveObvPerm($\pi, A, n, c, \delta$).

1. If $n^2 \geq |A|$, then run ObvPerm($\pi, A, c, \delta$) and terminate.

2. Let $r = \frac{|A|}{n}$ be the number of rounds. For ease, we will assume $n$ divides $|A|$. If not, we can pad enough fake blocks to make it divisible.

3. Split $A$ into $s$ buckets each consisting of $n$ blocks, denoted $A_1, \ldots, A_r$.

4. Initialize caches $C_1, \ldots, C_n$ to be empty.

5. Initialize $B_1, \ldots, B_n$ new buckets on the server of $r$ blocks each.

6. For each $i = 1, \ldots, r$, run RecursiveSpray($\pi, A_i, B_1, \ldots, B_n, C_1, \ldots, C_n, c, \delta$).

7. Run Cleanup($B_1, \ldots, B_n, n, C_1, \ldots, C_n$).

8. For each $i = 1, \ldots, n$, run RecursiveObvPerm($\pi, B_i, n, c, \delta$).

---

RecirsiveSpray($\pi, A_i, B_1, \ldots, B_n, C_1, \ldots, C_n, c, \delta$)

1. Download $A_i$ from the server.

2. Remove all fake blocks from $A_i$.

3. For each a $\in A_i$ compute $\pi(a)$. Furthermore, compute $bucket(a) = \left\lceil \frac{\pi(a)}{\delta} \right\rceil$, the new bucket that $a$ will go into. Enqueue $a$ into $C_{bucket(a)}$.

4. Run a random process to generate k $\in \{\lfloor c \rfloor, \lceil c \rceil\}$ such that $\mathbb{E}[k] = c$.

5. For each $j = 1, \ldots, n$, dequeue $k$ items from $C_j$. Decrypt and re-encrypt all $k$ items. If there are less than $k$ items in $C_j$, create fake items to make up the difference. Upload all $k$ items to $B_j$ on the server.

6. If $|C_1| + \ldots + |C_n| > \delta n$, then the algorithm fails.

---

Cleanup($B_1, \ldots, B_n, n, C_1, \ldots, C_n$)

1. If any $|C_1| > log^2 N$, then our algorithm fails.

2. For each $i = 1, \ldots, n$, dequeue $log^2 N$ items from $C_i$. Decrypt and re-encrypt all $k$ items. If there are less than $k$ items, create fake items to make up the difference. Upload all $log^2 N$ items to $B_i$ on the server.

# FIG. 6

700

Receiving A Permutation Request From A Client To Obliviously Move N Data Blocks Stored In Memory Hardware

702

Dividing Memory Locations Of The Memory Hardware Into Sqrt(N) Full Buckets

704

Allocating New Memory Locations In The Memory Hardware For Storing The N Data Blocks

706

Initializing Sqrt(N) Buffer Buckets Associated With The New Memory Locations

708

Iteratively Providing The Sqrt(N) Full Buckets To A Client

710

# FIG. 7

## FIG. 8

**EP 3 616 068 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014007250 A1

- US 9164702 B